# EUROPÄISCHE PATENTANMELDUNG

(11) **EP 1 887 311 A2**
(43) Veröffentlichungstag der Anmeldung: **13.02.2008**
(21) Anmeldenummer: 07014667.5
(22) Anmeldetag: 26.07.2007
(51) Int. Cl.: G01B 7/34

(54) **Verfahren zum Messen der Mikrostruktur von Oberflächen von Zylinderbohrungen und Messvorrichtung zur Durchführung des Messverfahrens**

(30) Priorität: 12.08.2006 EP 06016892; 17.02.2007 DE 102007007953
(71) Anmelder: Breitmeier, Ulrich, 76287 Rheinstetten (DE)
(72) Erfinder: Breitmeier, Ulrich, 76287 Rheinstetten (DE)
(74) Vertreter: Geitz Truckenmüller Lucht

(57) **Zusammenfassung**

Die Erfindung betrifft ein Verfahren zum Messen der Mikrostruktur, insbesondere der Rauheit von Oberflächen (23) von zylindrischen Bohrungen (22) von Werkstücken (24), beispielsweise von Motorzylindern, mithilfe einer einen Messkopf (21) aufweisenden Messvorrichtung (20), die eine in die Bohrung (22) einführbare Messsonde (25) mit einem taktilen Messtaster (26.1, 26.2) umfasst, der eine Tastspitze (27.2) zur Erfassung der Mikrostruktur der Oberfläche (23) der Bohrung (22) aufweist, wobei die Mikrostruktur der Oberfläche (23) der Bohrung (22) mithilfe mehrerer Tastspitzen (27.2) von mehreren taktilen Messtastern (26.1, 26.2) der diese Messtaster (26.1, 26.2) enthaltenden Messsonde (25) insbesondere im Takt einer Produktionslinie vorzugsweise simultan von mehreren der taktilen Messtaster (26.1, 26.2) erfasst wird und betrifft ferner eine Messvorrichtung 20 zur Durchführung des Verfahrens.

## Beschreibung

Die Erfindung betrifft ein Verfahren zum Messen der Mikrostruktur, insbesondere der Rauheit von Oberflächen von zylindrischen Bohrungen von Werkstücken, beispielsweise von Motorzylindern, mithilfe einer einen Messkopf aufweisenden Messvorrichtung, die eine in die Bohrung einführbare Messsonde mit einem taktilen Messtaster umfasst, der eine Tastspitze zur Erfassung der Mikrostruktur der Oberfläche der Bohrung aufweist und eine Messvorrichtung zur Durchführung des Verfahrens.

Derartige Messvorrichtungen sind seit vielen Jahren aus der Praxis allgemein bekannt geworden und werden zur stichprobenartigen Messung der Mikrostruktur von Oberflächen von Zylinderbohrungen eingesetzt. Dabei ist es aufgrund der großen Messzeit schwierig, statistisch aussagefähige Ergebnisse innerhalb einer in der Produktion vorgegebenen, vergleichsweise kurzen Taktzeit zu erhalten. Erstrecht gilt dies bei einer in der Produktion von hochwertigen Bauteilen erforderlichen Hundertprozent-Prüfung. Eine derartige Hundertprozent-Prüfung der Mikrostruktur der Oberflächen von Zylinderbohrungen in kurzen Produktionstaktzeiten mit der dabei erforderlichen statistischen Aussagekraft ist mit den bislang bekannt gewordenen Messvorrichtungen nicht möglich. Obwohl sich dieses Problem in der Praxis bereits seit vielen Jahren gestellt hat, wurden dennoch keine Lösungen dafür gefunden.

Aus der US-PS 4 872 269 ist eine Messvorrichtung mit einem Messkopf zur Messung der 3-dimensionalen Form einer zylindrischen Bohrung bekannt geworden, mit deren Hilfe ausschließlich die makroskopische Form betreffende Eigenschaften einer Zylinderbohrung, wie deren Geradheit, Zylindrizität, Konizität oder deren maximaler sowie minimaler Radius erfassbar sind. Diese Formmessvorrichtung hat zur Messung der Form der Zylinderbohrungen mehrere kolbenartige Stifte, deren herausragende Enden abgeflacht sind. Mit derartigen Stiften ist eine Erfassung der Mikrostruktur der Bohrungsoberfläche einer Zylinderbohrung unmöglich.

Es ist eine Aufgabe der Erfindung, das eingangs erwähnte Verfahren und die eingangs erwähnte Vorrichtung zur Durchführung dieses Verfahrens derart zu verbessern, dass vorteilhafte Möglichkeiten für eine Hundertprozent-Prüfung und/oder für eine In-Line-Prüfung der Oberflächenmikrostruktur von zylindrischen Bohrungen von Werkstücken in kurzen Taktzeiten in einer Produktionslinie bestehen.

Diese Aufgabe wird durch ein Verfahren gemäß Anspruch 1 und eine Messvorrichtung zur Durchführung des Verfahrens nach Anspruch 2 gelöst. Durch diese, im Lichte eines bereits seit vielen Jahren bestehenden Bedürfnisses nach einer Lösung der eingangs erwähnten Praxisprobleme überraschend einfach erscheinenden Maßnahmen ist es nunmehr erstmals möglich, im Takt einer Produktionslinie eine automatisierbare Mikrostrukturmessung, insbesondere eine Rauheitsmessung der Oberfläche von Zylinderbohrungen bei gleichzeitig kurzer Prüfzeit und mit einer gewünschten statistischen Aussagekraft, vorzugsweise an mehreren Stellen der Bohrungswand gleichzeitig, d. h. simultan durchzuführen.

Bei einer derartigen Messvorrichtung ist es zweckmäßig, wenn wenigstens zwei, vorzugsweise alle taktilen Messtaster über den Umfang der Messsonde und in vorzugsweise gleichen Umfangswinkeln um die Längsachse der Messsonde beabstandet zueinander angeordnet sind. Dadurch ergeben sich nach einem Absinken der Messsonde in die Bohrung in eine gewünschte Höhenposition vorteilhafte Messmöglichkeiten dafür, in dieser Höhenposition in kurzer Zeit eine Mehrzahl von Messungen in einem statistisch aussagefähigen Umfang zu erhalten.

Ferner kann vorgesehen sein, dass die taktilen Messtaster koaxial zu der Längsachse der Messsonde angeordnet sind. Dadurch können eine Mehrzahl von baugleichen Messtastern eingesetzt werden und es bestehen auch Vorteile bei der Auswertung der damit erfassten Messwerte.

Ferner kann vorgesehen sein, dass die taktilen Messtaster zum Zwecke der Erfassung der Mikrostruktur der Oberfläche der Bohrung jeweils mittels einer Vorschubeinrichtung, insbesondere in Längsrichtung der Messsonde, vorzugsweise mittels eines Motors bewegbar sind bzw. bewegt werden. Dies ermöglicht eine vergleichsweise einfache und schnelle Möglichkeit zur Messung der Mikrostruktur der Bohrungsoberfläche in der erforderlichen Messgenauigkeit.

Von besonderem Vorteil ist es, wenn die Messsonde ein Mittel zur Unterdrückung von Vibrationen zwischen den Messfühlern und der zu messenden Oberfläche der Bohrung, insbesondere zwischen den taktilen Messtastern und der zu messenden Oberfläche der Bohrung aufweist. Dadurch kann vermieden bzw. verhindert werden, dass Erschütterungen die Messergebnisse beeinflussen.

Gemäß einer besonders vorteilhaften Ausgestaltung kann vorgesehen sein, dass die Messsonde einen vorzugsweise zentralen Tragkörper aufweist, an dem wenigstens ein Messfühlerträger befestigt ist, der wenigstens einen Messfühler zur Messung von Kennwerten der Bohrung, insbesondere von Oberflächenkennwerten der Bohrung, vorzugsweise wenigstens einen der taktilen Messtaster zur Erfassung der Mikrostruktur der Oberfläche der Bohrung und/oder wenigstens einen optischen Sensor zur Erfassung der Honstruktur und/oder von Defekten und/oder von Poren und/oder von Kratzern der Oberfläche der Bohrung trägt, und der mithilfe eines Mechanismus von einer Einführ- und Entnahmestellung, in welcher die Messsonde zusammen mit dem Messfühlerträger und dem Messfühler vorzugsweise berührungslos in die Bohrung einführbar ist, in eine Messstellung überführbar ist bzw. überführt wird, in welcher eine Messung der Kennwerte der Bohrung mithilfe des Messfühlers möglich ist bzw. erfolgt, und umgekehrt. Dadurch ist ein leichtes Einführen und wieder Entnehmen der Messsonde ohne Beschädigungen, insbesondere der empfindlichen Messfühler möglich und es sind auch vorteilhafte Möglichkeiten zur lagerichtigen Positionierung der Messfühler in der Bohrung zum Zwecke einer Mikrostrukturmessung gegeben, wie auch vorteilhafte Möglichkeiten für eine zusätzliche optische Erfassung der Honstruktur, beispielsweise des Honwinkels und/oder zur Erfassung von Defekten, Poren und/oder Kratzern und dergleichen der Oberfläche der Bohrung. Zweckmäßigerweise kann auch eine konventionelle Kamera vorzugsweise an dem Einführende der Messsonde befestigt sein, um auch ein kleineres Messfeld präzise inspizieren bzw. vermessen zu können.

Gemäß einer besonders bevorzugten Ausführungsvariante kann vorgesehen sein, dass die Messsonde einen vorzugsweise zentralen Tragkörper aufweist, an dem wenigstens ein Fixierkörper zur Fixierung der Messsonde relativ zu der Bohrung befestigt ist, der mithilfe eines Mechanismus von einer Einführung- und Entnahmestellung, in welcher die Messsonde zusammen mit dem Fixierkörper vorzugsweise berührungslos in die Bohrung einführbar und wieder aus der Bohrung entnehmbar ist, in eine Fixierstellung überführbar ist bzw. überführt wird, in welcher der Fixierkörper an der Oberfläche der Bohrung unter Ausübung von Druckkräften auf die Oberfläche der Bohrung an dieser abgestützt ist, so dass die Messsonde in der Fixierstellung des Fixierkörpers gegen Bewegungen relativ zu der Bohrung fixiert ist, und umgekehrt. In dieser Fixierstellung des Fixierkörpers ist also die Messsonde in der Bohrung eingespannt. Auf diese Weise kann erreicht werden, dass etwaige Erschütterungen die Messergebnisse nicht beeinträchtigen.

In weiter bevorzugter Ausgestaltung kann vorgesehen sein, dass der Messfühlerträger und/oder der Fixierkörper mittels wenigstens eines Lenkers an dem Tragkörper angelenkt ist/sind, so dass der Messfühlerträger und/oder der Fixierkörper relativ zu dem Tragkörper von seiner Einführ- und Entnahmestellung in seine Messstellung und/oder seine Fixierstellung spreizbar ist bzw. gespreizt wird. Dadurch wird eine einfache sowie kostengünstige und dennoch präzise arbeitende Konstruktion erreicht.

Zweckmäßigerweise kann vorgesehen sein, dass wenigstens zwei der Messfühlerträger und/oder zwei der Fixierkörper an dem vorzugsweise zentralen Tragkörper der Messsonde befestigt und über den Umfang des Tragkörpers in Umfangswinkeln um dessen Längsachse zumindest in ihrer jeweiligen Messstellung bzw. Fixierstellung beabstandet zueinander angeordnet sind.

Ferner kann vorgesehen sein, dass wenigstens zwei der Messfühlerträger derart gekoppelt sind, dass sie gemeinsam von ihrer jeweiligen Einführ- und Entnahmestellung in ihre jeweilige Messstellung überführbar sind bzw. überführt werden, und umgekehrt. Dadurch ist eine schnelle und lagerichtige Positionierung der Messfühlerträger in der Bohrung möglich.

Alternativ oder zusätzlich kann vorgesehen sein, dass wenigstens zwei der Fixierkörper derart gekoppelt sind, dass sie gemeinsam von ihrer jeweiligen Einführ- und Entnahmestellung in ihre jeweilige Fixierstellung überführbar sind bzw. überführt werden, und umgekehrt. Dies ermöglicht eine entsprechend schnelle und lagerichtige Positionierung der Fixierkörper in der Bohrung.

Schließlich kann außerdem vorgesehen sein, dass wenigstens einer der Messfühlerträger und wenigstens einer der Fixierkörper derart gekoppelt sind, dass sie gemeinsam von ihrer jeweiligen Einführ- und Entnahmestellung in ihre jeweilige Messstellung bzw. Fixierstellung überführbar sind bzw. überführt werden, und umgekehrt. Dies ermöglicht entsprechende Vorteile auch bei Kombinationen eines oder mehrerer Messfühlerträger mit einem oder mehreren Fixierkörpern in einer einzigen Messsonde.

Ferner kann es zweckmäßig sein, wenn der Messfühlerträger und/oder der Fixierkörper mittels eines Motors von seiner bzw. ihrer Einführ- und Entnahmestellung in seine bzw. ihre Messstellung und/oder Fixierstellung bewegbar sind bzw. bewegt werden. Dadurch ist eine automatisierte Betätigung bzw. Prüfung möglich.

Von besonderem Vorteil ist es, wenn wenigstens einer der Messfühler, insbesondere wenigstens einer der taktilen Messtaster von dem Fixierkörper getragen ist, so dass der Messfühler bei einer Bewegung des Fixierkörpers von seiner Einführ- und Entnahmestellung in seine Fixierstellung, und umgekehrt, gemeinsam mit dem Fixierkörper bewegt wird. Dies ermöglicht in der Fixierstellung eine vorteilhafte schwingungsgedämpfte Anordnung des Messfühlers bzw. der Messfühler relativ zu der zu prüfenden Oberfläche der Bohrung, insbesondere vorteilhafte Messmöglichkeiten bei einem Einsatz von mehreren taktilen Messtastern zur Mikroprofil- bzw. Rauheitsmessung.

In zweckmäßiger Weiterbildung kann vorgesehen sein, dass wenigstens zwei der Messfühler, insbesondere zwei der taktilen Messtaster jeweils von einem der Fixierkörper getragen sind, die über den Umfang des Tragkörpers in Umfangsrichtung um dessen Längsachse zumindest in ihrer jeweiligen Fixierstellung beabstandet zueinander angeordnet sind, so dass der jeweiligen Messfühler bei einer Bewegung des zugehörigen Fixierkörpers von seiner Einführ- und Entnahmestellung in seine Fixierstellung, und umgekehrt, gemeinsam mit dem jeweiligen Fixierkörper bewegt wird.

Schließlich kann vorgesehen sein, dass die Vorschubeinrichtung für den taktilen Messtaster und gegebenenfalls deren Motor von dem Fixierkörper getragen, vorzugsweise an oder in einem Vorschubkörper des Fixierkörpers aufgenommen ist bzw. sind.

Von besonderem Vorteil ist es, wenn der Messfühlerträger mit wenigstens einem Abstands- und Stützelement zur Abstützung des Messfühlers in seiner Messstellung an der Oberfläche der Bohrung in einem vorbestimmten Abstand zu der Oberfläche der Bohrung versehen ist. Dies ermöglicht eine lagerichtige und schwingungsarme Positionierung des Messfühlers im Bereich der zu messenden Bohrungsoberfläche.

Dabei ist es vorteilhaft, wenn das Abstands- und Stützelement als eine Rolle oder Kugel gestaltet ist, die in der Messstellung des Messfühlerträgers um eine parallel zu der Oberfläche der Bohrung verlaufende Drehachse drehbar ist, so dass in dieser Messstellung der Messfühlerträger zusammen mit dem Messfühler in einem vorbestimmten Abstand zu der Oberfläche der Bohrung um die Längsachse der Bohrung drehbar ist. Dies ermöglicht eine einfache und präzise Messung bzw. Inspektion der Bohrungsoberfläche über den gesamten Umfang der Zylinderbohrung.

Ferner ist es vorteilhaft, wenn der Fixierkörper einen im Bereich der Tastspitze des taktilen Messtasters angeordneten Stützkörper aufweist, über den sich der Fixierkörper in seiner Fixierstellung auf der Oberfläche der Bohrung abstützt. Dadurch werden etwaige Schwingungen zwischen der Tastspitze des Messtasters und der zu messenden Bohrungsoberfläche wirkungsvoll reduziert.

Dabei kann gemäß einer besonders vorteilhaften Ausgestaltung vorgesehen sein, dass der Stützkörper wenigstens zwei in einem Abstand angeordnete Anlageelemente aufweist, die vorzugsweise starr miteinander verbunden sind und die in der Fixierstellung des Fixierkörpers an der Oberfläche der Bohrung anliegen. Dies ermöglicht eine noch bessere Schwingungsdämpfung.

Eine weiter verbesserte Schwingungsdämpfung kann dadurch erreicht werden, dass die Anlageelemente in der Fixierstellung des Fixierkörpers einer gemeinsamen Ebene angeordnet sind, die parallel zu der Längsachse der Bohrung ausgebildet ist und die vorzugsweise die Längsachse der Bohrung enthält.

Eine optimale Reduktion von Schwingungen in dem besagten Bereich kann dadurch erreicht werden, wenn die Tastspitze des taktilen Messtasters in der Fixierstellung des Fixierkörpers zwischen zwei der an der Oberfläche der Bohrung anliegenden Anlageelementen angeordnet ist und während der Durchführung der Mikrostrukturmessung in einem Messbereich zwischen den zwei Anlageelementen an der Oberfläche der Bohrung anliegend entlang bewegt wird.

Ein vorteilhafter Ausgleich von etwaigen Fluchtungs- und/oder Positionierungsfehlern kann dadurch erreicht werden, wenn der Stützkörper über ein Dreh- oder Pendellager an dem die Vorschubeinrichtung für den taktilen Messtaster enthaltenden Vorschubkörper angelenkt und von diesem getragen ist. Dabei kann vorgesehen sein, dass der Stützkörper um eine Drehachse relativ zu dem Vorschubkörper drehbar angeordnet ist, die in der Fixierstellung des Fixierkörpers etwa senkrecht zu der Längsachse der Bohrung angeordnet ist.

Zweckmäßigerweise ist der Stützkörper lösbar mit dem Vorschubkörper verbunden, so dass der Stützkörper abhängig von der Größe der Bohrung und/oder abhängig von den jeweiligen Messaufgaben ausgewechselt werden kann.

Eine weiter verbesserte Schwingungsreduktion bzw. Schwingungsdämpfung des taktilen Messsystems kann dadurch erreicht werden, dass der Vorschubkörper mit einem sich in Richtung der Tastspitze des taktilen Messtasters erstreckenden Gleitkufenarm verbunden ist, der im Bereich der Tastspitze des taktilen Messtasters mit einer Gleitkufe versehen ist, die durch die Federkraft einer Feder auf eine vorzugsweise parallel zu der Oberfläche der Bohrung verlaufende und vorzugsweise zu dieser hinweisenden Referenzoberfläche eines Referenzkörpers des Stützkörpers angedrückt ist, wobei die Gleitkufe während der Mikrostrukturmessung simultan zu einer Bewegung der Tastspitze entlang der Oberfläche der Bohrung entlang der Referenzoberfläche des Referenzkörpers des Stützkörpers bewegt wird.

Dabei ist es im Sinne einer noch weiter verbesserten Schwingungsreduktion von Vorteil, wenn der Gleitkufenarm und vorzugsweise auch der Tastarm mittels einer vorzugsweise als Blattfeder gestalteten Feder an dem Vorschubkörper befestigt ist bzw. sind.

Ferner kann vorgesehen sein, dass der Lenker mittels eines in Längsrichtung der Messsonde bewegbaren Steuerelements um seine fest unmittelbar oder mittelbar mit dem Tragkörper verbundene Drehachse drehbar ist, so dass bei einer Bewegung des Steuerelements in Längsrichtung der Messsonde der Messfühlerträger und/oder der Fixierkörper von seiner bzw. ihrer Einführ- und Entnahmestellung in seine bzw. ihre Messstellung und/oder Fixierstellung bewegbar sind bzw. bewegt werden. Dadurch wird eine einfache und kostengünstige, aber dennoch präzise Konstruktion erreicht.

In bevorzugter Ausgestaltung kann vorgesehen sein, dass es sich bei dem Steuerelement um eine mit einem Innengewinde versehene Mutter handelt, die an dem Tragkörper in Längsrichtung der Messsonde axial verschiebbar geführt, jedoch gegen eine Drehung um die Längsachse des Tragkörpers bzw. der Messsonde gesichert ist und die auf einer ein passendes Außengewinde aufweisenden Spindel aufgenommen ist, die vorzugsweise mittels eines Motors um ihre Längsachse drehbar ist, so dass eine Drehung der Spindel um ihre Längsachse zu einer Verschiebung der Mutter längs der Spindel führt.

Ferner kann es zweckmäßig sein, wenn der Lenker als Doppellenker mit zwei Lenkerarmen gestaltet ist, die auf voneinander weg weisenden Seiten des jeweiligen Fixierkörpers angelenkt sind. Dadurch ergeben sich günstige Führungs- und Anlenkverhältnisse in Verbindung mit einer besonders steifen Konstruktion.

Dabei kann vorgesehen sein, dass die Lenkerarme starr miteinander verbunden sind und/oder dass der Doppellenker stimmgabelförmig gestaltet ist und/oder dass die beiden Lenkerarme des Doppellenkers über ein Querverbindungsstück starr miteinander verbunden sind und sich von diesen ausgehend in eine bzw. die gleiche Richtung etwa parallel zueinander erstrecken.

Gemäß einer alternativen und besonders vorteilhaften Lösung kann ferner vorgesehen sein, dass der Lenker um eine Drehachse drehbar mittelbar an dem Tragkörper angelenkt ist und mit sich beiderseits dieser Drehachse in unterschiedliche, vorzugsweise entgegengesetzte Richtungen erstreckenden Lenkerarmen gestaltet ist, wobei ein erster Lenkerarm des Lenkers um eine in einem Abstand zu seiner Drehachse angeordnete Drehachse drehbar an dem Tragkörper angelenkt ist, die relativ zu dem Tragkörper in dessen Längsrichtung verschieblich an dem Tragkörper geführt ist, und wobei ein zweiter Lenkerarm des Lenkers um eine in einem Abstand zu seiner Drehachse angeordnete Drehachse an dem Fixierkörper und/oder an dem Messfühlerträger angelenkt ist, und wobei ein Hilfslenker um eine Drehachse drehbar an dem Tragkörper angelenkt ist und um die besagte Drehachse des Lenkers drehbar an dem Lenker angelenkt ist. Dadurch ergeben sich vorteilhafte Führungs- und Hebelverhältnisse.

Ferner kann vorgesehen sein, dass der Fixierkörper unabhängig von dem Messfühlerträger von seiner Einführ- und Entnahmestellung in seine Fixierstellung bewegbar ist bzw. bewegt wird. Alternativ oder zusätzlich kann vorgesehen sein, dass der Messfühlerträger unabhängig von dem Fixierkörper von seiner Einführ- und Entnahmestellung in seine Messstellung bewegt ist bzw. bewegt wird.

Gemäß einer besonders bevorzugten Ausführungsvariante kann vorgesehen sein, dass der Lenker oder die Lenker des Fixierkörpers und der Lenker oder die Lenker des Messfühlerträgers von einem gemeinsamen, in Längsrichtung der Messsonde bewegbaren Steuerelement um seine bzw. ihre fest unmittelbar oder mittelbar mit dem Tragkörper verbundene Drehachse bzw. verbundenen Drehachsen bewegbar ist/sind bzw. wird/werden, wobei einer Bewegung des Steuerelements in Längsrichtung der Messsonde entweder der Fixierkörper oder der Messfühlerträger von seiner Einführ- und Entnahmestellung in seine Fixierstellung bzw. Messstellung bewegt wird. Auf diese Weise kann eine optische Prüfung der Oberfläche der Bohrung vorteilhaft getrennt von der Mikrostruktur- bzw. Rauheitsmessung durchgeführt werden, wobei Beschädigungen der empfindlichen Tastspitzen zum Zwecke bzw. während der optischen Messung verhindert werden.

In weiter vorteilhafter Ausgestaltung kann vorgesehen sein, dass der Messfühlerträger und/oder der Fixierkörper mithilfe der Federkraft einer Feder von seiner/ihrer Messstellung und/oder Fixierstellung in seine/ihre Einführ- und Entnahmestellung bewegbar ist bzw. wird.

Ferner kann vorgesehen sein, dass die Messsonde relativ zu einem fest mit ihr verbundenen Messkopfteil mittels eines Motors um eine Längsachse drehbar ist bzw. gedreht wird. Auf diese Weise kann die Mikrostrukturmessung und/oder die Oberflächenstrukturmessung der Bohrung in einer gewünschten axialen Höhe über den gesamten Umfang der Bohrung automatisiert durchgeführt werden.

Zusätzlich oder gegebenenfalls auch alternativ kann vorgesehen sein, dass die Messsonde relativ zu einem fest mit ihr verbundenen Messkopfteil mittels eines Motors längs der Messachse der Bohrung bewegbar ist bzw. bewegt wird. Auf diese Weise kann die Mikrostrukturmessung und/oder Oberflächenstrukturmessung der Bohrung in einer bestimmten Umfangsposition über eine gewünschte Tiefe der Bohrung automatisiert durchgeführt werden. Ferner können durch diese Maßnahmen gegebenenfalls auch die separaten Vorschubeinrichtungen für eine Bewegung der Tastspitzen der taktilen Messtaster entfallen, d. h. diese können zusammen mit den Messfühlerträgern und/oder Fixierkörpern in Längsrichtung der Bohrung bewegt werden, wobei zugleich die Mikrostruktur der Oberfläche der Bohrung mittels der Tastspitzen gemessen werden kann.

Zu diesem Zwecke kann also vorgesehen sein, dass die taktilen Messtaster zum Zwecke der Erfassung der Mikrostruktur der Oberfläche der Bohrung ausschließlich mittels des vorgenannten Motors in Richtung der Bohrung bewegt werden.

Es ist ferner zweckmäßig, wenn ein bzw. der fest mit der Messsonde verbundene/r Messkopfteil fest mit einer Fixiereinrichtung zur Fixierung des Messkopfes an dem die Bohrung aufweisenden Werkstück, vorzugsweise an dem Zylinderkopf eines Motors, verbunden ist. Diese Fixiereinrichtung wird zweckmäßigerweise mithilfe von in Bohrungen einsetzbaren Stiften gegenüber dem Werkstück verankert, so dass die Messsonde während der Messung relativ zu dem Werkstück fixiert bleibt.

In vorteilhafter Ausgestaltung der taktilen Messtaster kann vorgesehen sein, dass diese als Bezugsebenentaster und/oder als Kufentaster, vorzugsweise als Pendelkufentaster gestaltet sind.

Es ist ferner vorteilhaft, wenn die Messvorrichtung mit wenigstens einem Vibrationsmessfühler zur Messung von Vibrationen der Messsonde ausgestattet ist.

In besonders vorteilhafter Ausgestaltung kann vorgesehen sein, dass wenigstens einer der taktilen Messtaster als Vibrationsmessfühler zur Messung der Vibrationen der Messsonde und/oder der Oberfläche der Bohrung gestaltet ist bzw. verwendet wird, so dass die Vibrationen mittels des wenigstens einen taktilen Messtasters messbar sind bzw. gemessen werden. Die Vibrationsmessung kann dabei besonders vorteilhaft dadurch durchgeführt werden, dass die Tastspitze des als taktiler Messtaster ausgebildeten Vibrationsmessfühlers während der Messung der Mikrostruktur der Oberfläche der Bohrung mithilfe des wenigstens einen weiteren taktilen Messtasters, relativ zu der Oberfläche der Bohrung zumindest in Längsrichtung der Bohrung fixiert gehalten ist bzw. wird, während die Tastspitze des wenigstens einen weiteren taktilen Messtasters zum Zwecke der Erfassung der Mikrostruktur der Oberfläche der Bohrung entlang derselben vorzugsweise in deren Längsrichtung bewegt ist bzw. wird.

Unter den Praxisbedingungen bei einer Mikrostrukturmessung von Zylinderbohrungsoberflächen in einer Produktionslinie sind die Bohrungen häufig mit Flüssigkeiten wie Öl und/oder Wasser und/oder mit Partikeln aller Art verschmutzt. Es ist deshalb zum Zwecke der Verbesserung der Qualität der Erfassung bzw. Messung der Mikrostruktur der Oberfläche derartiger Bohrungen zweckmäßig, wenn an dem Einführende der Messsonde eine Reinigungsvorrichtung zur Reinigung, insbesondere zum Abblasen und/oder Abstreifen der Oberfläche der Bohrung angeordnet ist.

Dabei ist es zweckmäßig, wenn die Reinigungsvorrichtung an dem Tragkörper vorzugsweise lösbar befestigt ist, so dass die Reinigungsvorrichtung also ausgewechselt werden kann.

Zweckmäßigerweise kann die Reinigungsvorrichtung mit oder als eine Kreisscheibe gestaltet sein, die einen Außendurchmesser aufweist, der vorzugsweise geringfügig kleiner ist als der Innendurchmesser der Bohrung und die mit einem nach außen offenen Ringschlitz gestaltet ist, durch den Luft-und/oder Gas zum Zwecke eines Abblasens der Oberfläche der Bohrung hindurch führbar ist bzw. hindurchgeführt wird.

Ferner kann vorgesehen sein, dass die Reinigungsvorrichtung mit einer oder als eine Kreisscheibe gestaltet ist, die im Bereich ihres Außenumfanges einen umlaufenden Abstreifer zum Abstreifen der Oberfläche der Bohrung aufweist. Zu diesem Zwecke kann der Abstreifer vorteilhaft mit einem Abstreifergummi und/oder mit Abstreiferborsten gestaltet sein.

Zur taktilen Messung der Oberflächenmikrostruktur der Bohrungen dient eine Diamantnadel, welche an einem Träger befestigt ist, über den die Nadelauslenkung erfasst wird. Dazu ist ein Messmittel vorhanden, welches die Nadelauslenkung misst. Diese Anordnung ist üblicherweise zusammen in einem Gehäuse eingebaut und wird Oberflächenmesstaster genannt. Damit man ein Linienprofil messen kann, muss dieser Messtaster über die zu messende Oberfläche gezogen werden. Dazu können sogenannte Vorschubapparate dienen.

Gemäß einer besonders vorteilhaften Ausführungsvariante kann vorgesehen sein, dass die taktilen Messtaster in Axial- bzw. Längsrichtung der Messsonde versetzt und/oder beabstandet zueinander angeordnet sind. Dadurch ergeben sich weiter verbesserte Möglichkeiten für eine 100-Prozent-Prüfung und/oder für eine Inline-Prüfung der Oberflächenmikrostruktur der Bohrungen in kurzen Taktzeiten in einer Produktionslinie und vorteilhafte Möglichkeiten für eine platz- und kostensparende Konstruktion.

Besonders platz- und kostensparend ist es, wenn mehrere der taktilen Messtaster mit einer gemeinsamen Vorschubeinrichtung gekoppelt sind, mit deren Hilfe sie gemeinsam in Axial- bzw. Längsrichtung der Messsonde bzw. der Bohrung bewegbar sind bzw. bewegt werden. Bei dieser Vorschubeinrichtung kann es sich zweckmäßigerweise um einen Motor handeln.

Ferner kann vorgesehen sein, dass die taktilen Messtaster an einem gemeinsamen, sich in Längs- bzw. Axialrichtung der Messsonde erstreckenden Tragkörper befestigt und vorzugsweise von diesem getragen sind.

Ferner kann vorgesehen sein, dass der Tragkörper mit Hilfe einer bzw. der gemeinsamen Vorschubeinrichtung in Axial- bzw. Längsrichtung der Messsonde bewegbar ist bzw. wird.

Ferner kann vorgesehen sein, dass es sich bei dem Tragkörper um eine Arbeitsspindel mit einem Außengewinde handelt, an der die taktilen Messtaster jeweils über einen mit einem passenden Innengewinde versehenen Körper, vorzugsweise einer Mutter, gelagert sind.

Die linienhafte Oberflächenprofilmessung ist eine relative Messung, denn es kommt nur auf die relative Lage der Messpunkte zueinander an, nicht aber auf die absolute Lage im Raum. Die Zug- bzw. Schubbewegung der Taster erfolgt somit zweckmäßigerweise gegenüber einer Referenz- bzw. Bezugsebene, so dass über eine bestimmte Messstrecke, über welche eine linienhafte Oberflächenprofilmessung der Bohrung vorgenommen werden soll, der jeweilige Abstand zwischen der Messoberfläche und der Referenz- bzw. Bezugsebene mit Hilfe des jeweiligen Messtasters gemessen wird.

Demgemäß kann vorgesehen sein, dass den taktilen Messtastern wenigstens ein gemeinsamer Referenzkörper zugeordnet ist, der sich in Axial- bzw. Längsrichtung der Messsonde erstreckt und der eine oder mehrere Referenzebenen für die diesem Referenzkörper zugeordneten taktilen Messtaster aufweist.

Dabei kann vorgesehen sein, dass der Referenzkörper wenigstens eine gemeinsame Referenzebene für mehrere der diesem Referenzkörper zugeordneten taktilen Messtaster aufweist.

Ferner kann vorgesehen sein, dass der Referenzkörper eine gemeinsame Referenzebene für alle der diesem Referenzkörper zugeordneten taktilen Messtaster aufweist.

Die vorstehend erwähnten Referenzebenen bzw. die Referenzkörper können beispielsweise mit oder aus Glas gebildet sein. Derartige Referenzkörper lassen sich besonders einfach und kostengünstig herstellen.

Ferner kann vorgesehen sein, dass die sich in Axial- bzw. Längsrichtung der Messsonde bzw. der Bohrung erstreckende Referenzebene eine Längskontur aufweist, die der Längskontur der Bohrung entspricht. Vorteilhafterweise kann also bei dem linienhaften Abtasten einer geraden Oberfläche einer Bohrung eine dementsprechend gerade Referenzebene vorgesehen sein, während beispielsweise bei einem linienhaften Abtasten einer in einem bestimmten Radius gekrümmten Oberfläche einer Bohrung auch eine dementsprechend kreisförmige bzw. einen Kreisabschnitt aufweisende Referenzebene vorgesehen sein kann.

Ferner kann vorgesehen sein, dass die taktilen Messtaster jeweils über ein Festkörpergelenk mit einem sich in Axial- bzw. Längsrichtung der Messsonde erstreckenden Messtasterträger fest verbunden sind, das eine ebene Bewegung der taktilen Messtaster ermöglicht bzw. verursacht. Dadurch kann gegebenenfalls auf einen eine Referenzebene enthaltenden separaten Referenzkörper verzichtet werden, an bzw. auf der mehrere Anlagekörper während des taktilen Messens angelegt werden müssten.

Gemäß einer besonders vorteilhaften Ausführungsvariante kann vorgesehen sein, dass die taktilen Messtaster über wenigstens einen parallelkinematischen Auslenkungskörper, vorzugsweise über wenigstens zwei Blattfedern, mit einem bzw. dem sich in Axial- bzw. Längsrichtung der Messsonde erstreckenden Messtasterträger fest verbunden sind. Es versteht sich, dass die taktilen Messtaster auch jeweils über einen parallelkinematischen Auslenkungskörper, vorzugsweise jeweils über wenigstens zwei Blattfedern, mit einem bzw. dem sich in Axial- bzw. Längsrichtung der Messsonde erstreckenden Messtasterträger fest verbunden sein können.

Eine derartige Führung stellt eine ideale Bezugsebene dar, weil sie eine Bewegung des Messtasters bzw. dessen Vorschubkörpers auf einem "atomar glatten" Kreisbogen ermöglichen.

Ferner kann gemäß einer vorteilhaften Weiterbildung vorgesehen sein, dass die in Axial- bzw. Längsrichtung der Messsonde versetzt und/oder beabstandet zueinander angeordneten taktilen Messtaster, gegebenenfalls die gemeinsame Vorschubeinrichtung und/oder gegebenenfalls der Tragkörper und/oder gegebenenfalls der gemeinsame Referenzkörper und/oder gegebenenfalls die Festkörpergelenke bzw. die Auslenkungskörper, bzw. die Blattfedern und der Messtasterträger an bzw. von einem der Messfühlerträger und/oder einem der Fixierkörper aufgenommen sind.

Weil die Tastspitze der taktilen Messtaster üblicherweise einen Radius von 2 bis 5 Mikrometer aufweist, muss die Anpresskraft klein gehalten werden, da durch den kleinen Nadelradius der Flächendruck ansonsten sehr groß wird und das Werkstück dann möglicherweise verkratzt werden könnte. Eine kleine Anpresskraft aber macht das Messsystem empfindlich gegen Vibrationen, wodurch die Tastnadel zum Abheben neigt.

Demgemäß kann vorgesehen sein, dass die in die Bohrung einführbare Messsonde über eine Kupplung fest, jedoch lösbar mit einem Messkopfteil verbindbar bzw. verbunden ist, der eine Einrichtung zum Bewegen der Messsonde in Axial- bzw. Längsrichtung der Bohrung und/oder in Umfangsrichtung der Bohrung und/oder zum Drehen der Messsonde um ihre Längsachse aufweist. Bei dieser Einrichtung kann es sich beispielsweise um einen Motor oder mehrere Motoren handeln.

Ferner kann vorgesehen sein, dass an dem Einführende der Messsonde ein vorzugsweise scheibenförmiger Absaughilfskörper vorgesehen ist, dessen Außendurchmesser geringfügig kleiner ist als der Innendurchmesser der Bohrung, so dass die Messsonde mit dem Absaughilfskörper in die Bohrung unter Ausbildung eines ringförmigen Spaltes zwischen dem Absaughilfskörper und der Bohrungswand der Bohrung einführbar ist. Dadurch besteht die Möglichkeit, Kontaminationen bzw. Verunreinigungen der Bohrung effektiv durch Absaugen zu entfernen, ohne dass es zu einer Verunreinigung der Messtaster und/oder der Messfühler, beispielsweise durch Ölnebel kommt.

Zu diesem Zwecke kann eine Absaugvorrichtung vorgesehen sein, mit deren Hilfe Luft und/oder Gas durch den Spalt zwischen dem Absaughilfskörper und der Bohrungswand der Bohrung absaugbar ist, um eine Reinigung der Oberfläche der Bohrung bewirken zu können bzw. zu bewirken. Zu diesem Zwecke ist es von Vorteil, wenn die Absaugvorrichtung die Luft und/oder das Gas in Einführrichtung der Messsonde von dieser weg absaugt.

Ferner kann vorgesehen sein, dass die Messsonde wenigstens einen ersten optischen Sensor aufweist, mit dem die Oberfläche der Bohrung mit einer niedrigen Auflösung erfassbar ist bzw. erfasst wird und wenigstens einen zweiten optischen Sensor, vorzugsweise eine Kamera aufweist, mit dem bzw. der die Oberfläche der Bohrung mit einer hohen bzw. höheren Auflösung erfassbar ist bzw. erfasst wird.

Dabei kann in einem ersten Schritt mit Hilfe des ersten optischen Sensors die Oberfläche der Bohrung über einen Großteil ihres Umfanges, vorzugsweise sogar über ihren gesamten Umfang, also über wenigstens 360 Grad, in einer niedrigen Auflösung, beispielsweise von 300 dpi erfasst werden, und in einem zweiten Schritt kann mit Hilfe des zweiten optischen Sensors an einer oder mehreren Stellen der Bohrung deren lokale Oberfläche in einer hohen bzw. höheren Auflösung, beispielsweise von 4.800 dpi, erfasst werden. In der niedrigen bzw. niedrigeren Auflösung unter Verwendung des ersten optischen Sensors kann also ein Rundumscan gegebenenfalls über die gesamte Bohrungslänge durchgeführt werden. Dabei können relativ großflächige Oberflächenfehler wie Drehriefen, Lunker und dergleichen erfasst werden. Bei einer entsprechend niedrigen Auflösung von etwa 400 dpi können derartige Oberflächen mit einer Größe von wenigstens etwa 60 Mikrometer erkannt werden.

Mit Hilfe des zweiten optischen Sensors können an mehreren lokalen Stellen der Bohrungswand der Bohrung Detailaufnahmen mit einer höheren Auflösung, beispielsweise mit 4.800 dpi erstellt und ausgewertet werden, was beispielsweise einer erfassten bzw. auswertbaren Fläche von 1 x 1,5 mm² entspricht. Bei einer derart hohen Auflösung kann die Hohntextur, also beispielsweise die Riefenverteilung, der Anteil an Riefen rechts/links, der Hohnwinkel, das Verhältnis tiefer/flacher Riefen und dergleichen erfasst und ausgewertet werden, deren Ausprägung etwa größer oder gleich 5 Mikrometer beträgt.

Für den Fall, dass bei der optischen Prüfung mit Hilfe des ersten optischen Sensors bei niedriger Auflösung irgendwelche kleineren Auffälligkeiten festgestellt werden, können an den entsprechenden Stellen mit Hilfe des zweiten optischen Sensors Detailaufnahmen an den vorgegebenen Stellen aufgenommen werden. Mit anderen Worten kann also vorgesehen sein, dass dann, wenn bei der optischen Prüfung mit Hilfe des ersten optischen Sensors in niedriger Auflösung an bestimmten Stellen der Bohrungswand der Bohrung irgendwelche Auffälligkeiten festgestellt werden, an diesen Stellen dann mit Hilfe des zweiten optischen Sensors die jeweiligen Oberflächendetails erfasst und ausgewertet werden.

Bei der In-line-Messung ist besonderes Augenmerk darauf zu legen, dass die empfindlichen taktilen Messtaster nicht verschmutzen, weil dies zu entsprechenden Messfehlern führen kann. Zwar kann die Messung vorzugsweise in einer Kabine durchgeführt werden, die von außen über ein Gebläse mit Filter belüftet wird, aber dies kann unter Umständen zur Sauberhaltung der empfindlichen Messtaster nicht ausreichen.

Demgemäß kann vorgesehen sein, dass die taktilen Messtaster, insbesondere der die taktilen Messtaster aufweisende Teil der Messonde, in einer nicht in die Bohrung eingeführten Stellung bzw. im Ruhezustand, vorzugsweise auch in einer in die Bohrung eingeführten Stellung bzw. Messstellung mittels einer, vorzugsweise mit einer oder als eine Schutzhülle gestalteten, Schutzvorrichtung gegen eine Kontamination mit Verunreinigungen, insbesondere Staub, die bzw. der in der Außenluft vorhanden sein kann bzw. ist, geschützt sind bzw. ist.

Dabei kann in einer bevorzugten Ausgestaltung vorgesehen sein, dass die Schutzvorrichtung die Messsonde zumindest im Bereich der taktilen Messtaster vollumfänglich mit Bezug auf die Längsachse der Messsonde umgreift.

Vorzugsweise kann die Schutzvorrichtung hauben- oder glockenförmig gestaltet sein.

Ferner kann vorgesehen sein, dass die Schutzvorrichtung eine zum Einführende der Messsonde hin offene erste Öffnung und eine zweite Öffnung aufweist, durch die ein bzw. der Tragkörper für die taktilen Messtaster, vorzugsweise abgedichtet, hindurch tritt.

Ferner kann vorgesehen sein, dass die Messsonde im Bereich ihres Einführendes einen, vorzugsweise plattenförmigen, insbesondere als eine bzw. die Kreisscheibe gestalteten, Abschlusskörper aufweist, an dem dann, wenn die taktilen Messtaster nicht in die Bohrung eingeführt sind, eine Ringdichtung abdichtend anliegt, die, vorzugsweise an der Schutzvorrichtung befestigt, zu der Schutzvorrichtung hin abgedichtet ist, so dass sich die taktilen Messtaster in einem von der Schutzvorrichtung, dem Abschlusskörper und der Ringdichtung begrenzten Schutzraum befinden. Die Ringdichtung kann gegebenenfalls ein- oder mehrteilig an der Schutzvorrichtung befestigt sein.

Ferner kann vorgesehen sein, dass die Ringdichtung einen Außendurchmesser aufweist, der größer ist, als der Innendurchmesser der Bohrung, so dass die Ringdichtung auf einem Bohrungsrand der Bohrung, vorzugsweise vollumfänglich, abdichtend auflegbar ist bzw. aufliegt.

Bevorzugt kann vorgesehen sein, dass die Schutzvorrichtung an einem bzw. an dem Messkopfteil des Messkopfes befestigt ist.

Ferner kann vorgesehen sein, dass die Schutzvorrichtung in Längsrichtung der Messsonde relativ zu dieser bewegbar ist und/oder dass die Schutzvorrichtung mit elastischen und/oder mit relativ zueinander bewegbaren Teilen ausgebildet ist, so dass die Schutzvorrichtung in Längsrichtung der Messsonde bewegbar, insbesondere stauchbar und/oder zusammendrückbar und/oder zusammenschiebbar und wieder streckbar und/oder wieder auseinanderziehbar und/oder wieder auseinanderschiebbar ist.

Ferner kann vorgesehen sein, dass die Schutzvorrichtung nach Art eines Faltenbalges und/oder mit oder aus relativ zueinander teleskopartig verschiebbaren, vorzugsweise mit Rohrsegmenten oder als Rohrsegmente ausgebildeten, Teilen gestaltet ist.

Bevorzugt kann vorgesehen sein, dass beim Einführen der Messsonde in die Bohrung, ausgehend von einer Stellung, in welcher sich die taktilen Messtaster nicht in der Bohrung befinden, die Schutzvorrichtung in eine Freigebestellung überführbar ist bzw. überführt wird, in welcher mit Hilfe der taktilen Messtaster die Mikrostruktur der Oberfläche der Bohrung erfassbar ist bzw. erfasst wird.

Ferner kann vorgesehen sein, dass die Schutzvorrichtung eine mit einem Luftfilter, insbesondere mit einem Staubfilter, versehene Durchgangsöffnung aufweist.

Die Erfindung betrifft auch eine Messstation mit mehreren Vorrichtungen zum Messen der Mikrostruktur von Oberflächen von Bohrungen nach einem der Ansprüche 2 bis 72. Auf diese Weise kann also die Oberflächenmikrostruktur von Bohrungen ein und desselben Werkstückes oder von mehreren Werkstücken vorzugsweise gleichzeitig erfasst bzw. gemessen werden. Demgemäß kann mithilfe einer derartigen Messstation vorgesehen sein, dass die Mikrostruktur der Oberflächen von mehreren Bohrungen simultan mittels der erfindungsgemäßen Messvorrichtungen gemessen wird.

Weitere Vorteile, Merkmale und Gesichtspunkte der Erfindung sind dem nachfolgenden Beschreibungsteil entnehmbar, in dem bevorzugte Ausführungsbeispiele der Erfindung anhand der Figuren näher beschrieben werden.

Es zeigen:
- Fig. 1: eine dreidimensionale Ansicht einer Vorrichtung zur Messung der Mikrostruktur von Bohrungen;
- Fig. 2: eine Seitenansicht der Vorrichtung gemäß Figur 1;
- Fig. 3: einen Längsschnitt der Vorrichtung entlang der Schnittlinie 3-3 in Figur 2;
- Fig. 4: einen Längsschnitt der Vorrichtung mit ihrer in eine Bohrung eingeführten Messsonde, wobei sich deren taktile Messtaster in einer Einführ- und Entnahmestellung befinden;
- Fig. 5: einen Längsschnitt der Vorrichtung mit ihrer in eine Bohrung eingeführten Messsonde gemäß Figur 4, wobei sich deren taktile Messtaster zusammen mit deren Messfühlerträgern, die hier zugleich als Fixierkörper gestaltet sind, in einer Mess- und Fixierstellung befinden;
- Fig. 6: einen schematischen Querschnitt durch eine Messsonde mit drei taktilen Messtastern;
- Fig. 7: einen schematischen Querschnitt durch eine Messsonde mit vier taktilen Messtastern, entlang der Schnittlinie 7-7 in Figur 10;
- Fig. 8: einen schematischen Querschnitt durch eine Messsonde mit zwei taktilen Messtastern und mit einem optischen Bildaufnahmemodul bzw. Sensor;
- Fig. 9: einen schematischen Querschnitt durch eine Messsonde mit drei taktilen Messtastern und mit einem optischen Bildaufnahmemodul bzw. Sensor entlang der Schnittlinie 9-9 in Figur 11;
- Fig. 10: eine schematische Ansicht einer Messvorrichtung mit einer vier taktile Messtaster sowie eine Kamera aufweisenden Messsonde;
- Fig. 11: eine schematische Ansicht einer an einem Gestell befestigten Messvorrichtung mit einer drei taktile Messtaster und einen optischen Bildaufnahmemodul bzw. Sensor sowie eine Kamera aufweisenden Messsonde;

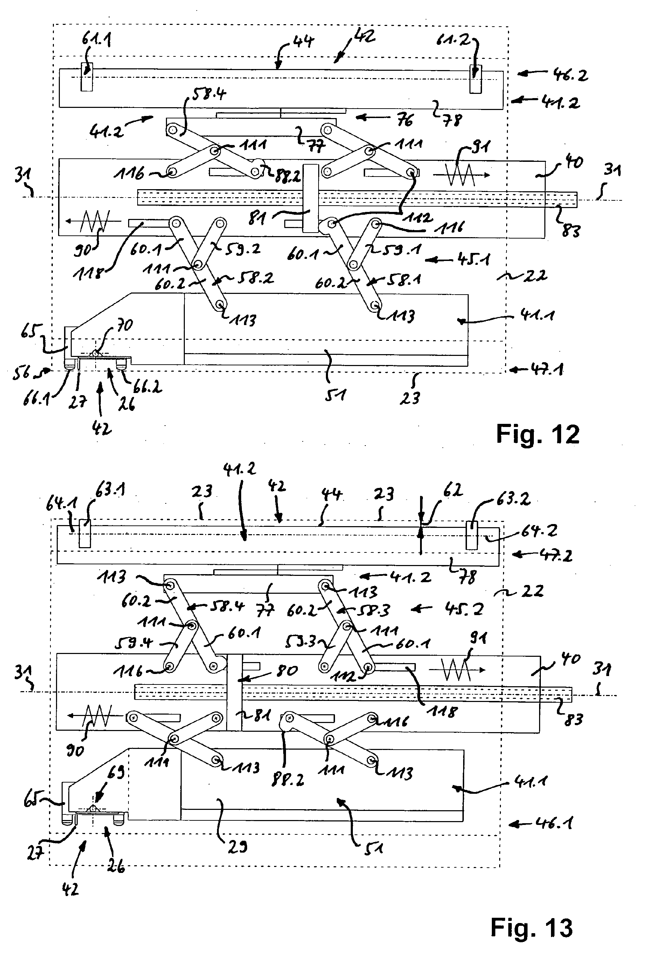

- Fig. 12: eine teilweise schematisierte Ansicht einer Messvorrichtung, an deren Tragkörper sowohl ein als Fixierkörper gestalteter Messfühlerträger für einen taktilen Messtaster als auch ein Messfühlerträger für einen optischen Sensor über einen alternativen Mechanismus gekoppelt sind, mittels dessen entweder der Fixierkörper zusammen mit dem taktilen Messtaster oder der Messfühlerträger zusammen mit dem optischen Sensor von deren jeweiligen Einführ- und Entnahmestellung in deren jeweilige Mess- und Fixier- bzw. Messstellung bewegbar sind, wobei sich der Messfühlerträger für den optischen Sensor zusammen mit dem optischen Sensor in seiner Einführ- und Entnahmestellung befindet und wobei der Fixierkörper zusammen mit dem taktilen Messtaster mittels eines Steuerelements in seine Fixierstellung betätigt bzw. gespreizt ist;
- Fig. 13: eine Ansicht der Messvorrichtung gemäß Figur 12, wobei nunmehr der Messfühlerträger für den optischen Sensor zusammen mit diesem mittels desselben Steuerelements in seine Messstellung betätigt ist, während sich der Fixierkörper zusammen mit seinem taktilen Messtaster in seiner Einführ- und Entnahmestellung befindet;
- Fig. 14: eine Seitenansicht eines an einem als Messfühlerträger fungierenden Fixierkörpers befestigten taktilen Messtasters;
- Fig. 15: einen Längsschnitt der Einrichtungen gemäß Fig. 14 entlang der Schnittlinie 15-15 in Figur 16;
- Fig. 16: eine Vorderansicht der Einrichtungen gemäß Fig. 14;
- Fig. 17: eine schematische Ansicht einer Anordnung von mehreren, in Längsrichtung einer Messsonde beabstandet zueinander angeordneten taktilen Messtastern;
- Fig. 18: eine schematische Ansicht einer alternativen Anordnung von mehreren, in Längsrichtung einer Messsonde beabstandet zueinander angeordneten taktilen Messtastern;
- Fig. 19: eine schematische Ansicht eines alternativen Ausführungsbeispiels einer Messvorrichtung, bei der einer von vier Messfühlerträgern mit einer Anordnung von taktilen Messtastern gemäß Figur 17 oder Figur 18 versehen ist und mit einer Kupplung zwischen der Messsonde und einer Messkopfhalterung;
- Fig. 20: eine schematische Ansicht einer mit einer Schutzvorrichtung gegen Kontaminationen geschützten erfindungsgemäßen Messvorrichtung.

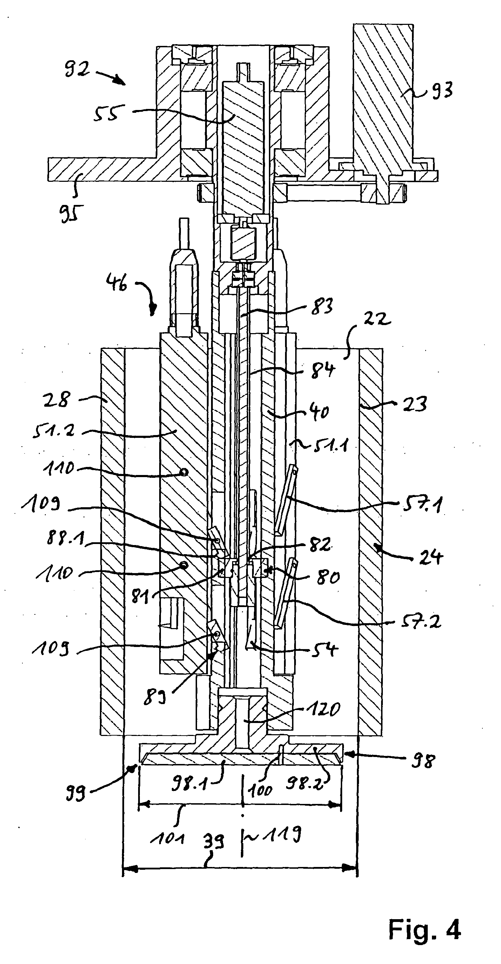

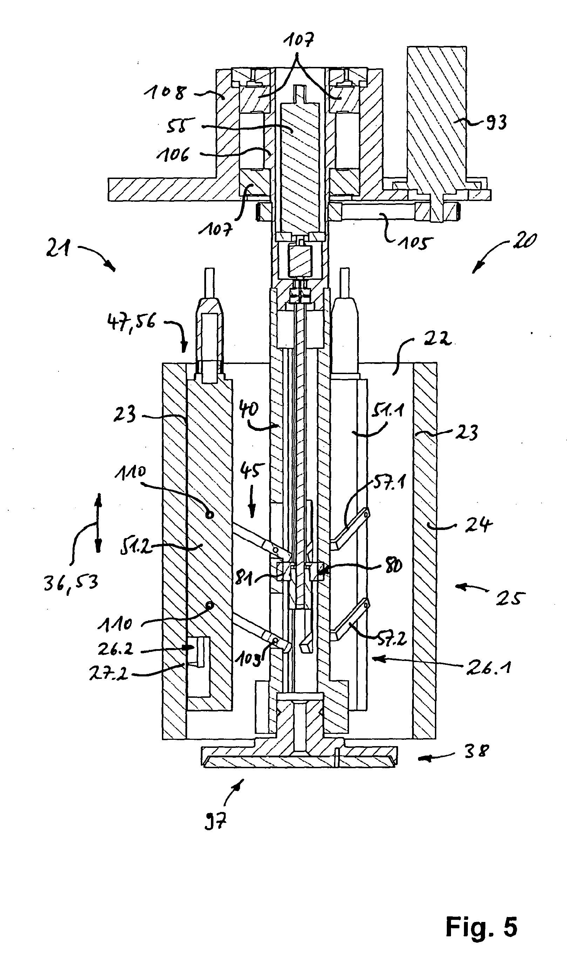

Die in den Figuren gezeigte Messvorrichtung 20 umfasst einen Messkopf mit einer Messsonde 25, die in eine zylindrische Bohrung 22 eines Werkstückes 24, beispielsweise eines Motorzylinders 28 einführbar ist, der bzw. das in den Figuren 4 und 5 sowie 10 und 11 schematisch gezeigt ist. Die Messsonde 25 enthält erfindungsgemäß mehrere taktile Messtaster 26; 26.1 bis 26.4, die jeweils eine Tastspitze 27; 27.1 bis 27.4 zur Erfassung der Mikrostruktur der Oberfläche 23 der Bohrung 22 des Werkstückes 24 aufweisen.

Damit die taktilen Messtaster 26; 26.1 bis 26.4 die Mikrostruktur, insbesondere die Rauheit der Oberfläche 23 von Zylinderbohrungen 22 präzise erfassen kann, weisen die Tastspitzen 27; 27.1 bis 27.4 einen Tastspitzenradius von kleiner als zehn Mikrometer auf. Bevorzugt werden Tastspitzen 27; 27.1 bis 27.4 mit einem Tastspitzenradius eingesetzt, der kleiner oder gleich fünf Mikrometer beträgt.

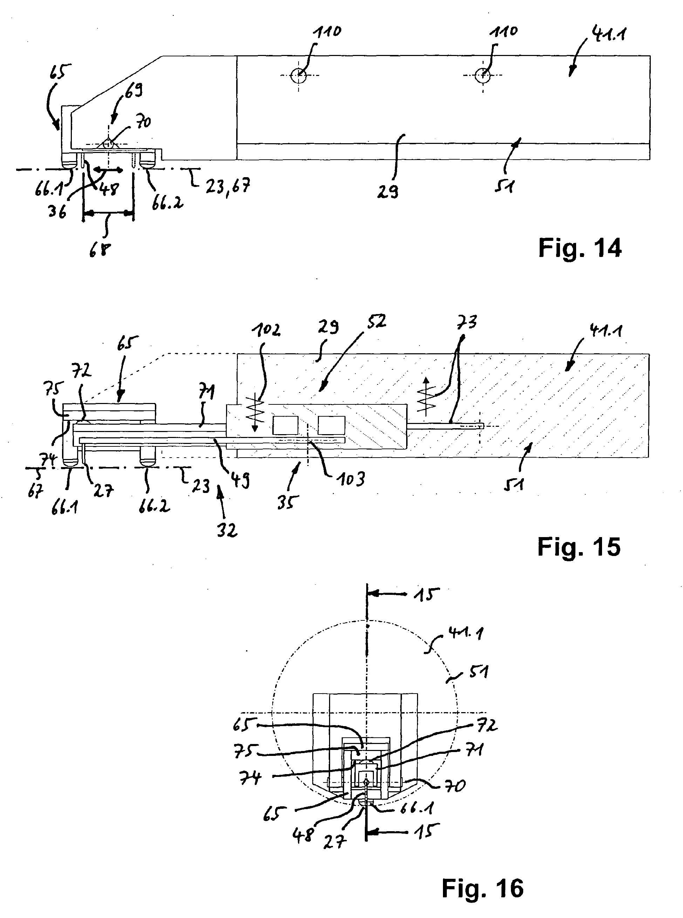

Der genaue Aufbau der taktilen Messtaster 26; 26.1 bis 26.4 wird weiter unten im Zusammenhang mit dem Figuren 14 bis 16 beschrieben.

Die Messsonde 25 umfasst einen zentralen Tragkörper 40, der hier als ein lang gestrecktes Rohr gestaltet ist. An dem Tragkörper 40 sind mehrere Messfühlerträger 41.1, 41.2 für Messfühler 42 befestigt. Bei diesen Messfühlern 42 handelt es sich um die taktilen Messtaster 26; 26.1 bis 26.4, wobei zusätzlich auch noch andere Messfühler, insbesondere optische Sensoren 44 zur Erfassung der Honstruktur und/oder von Defekten und/oder von Poren und/oder von Kratzern der Oberfläche 23 der Bohrung 22 von den Messfühlerträgern 41.2 getragen sein können.

Die Messfühlerträger 41.1, 41.2 können vorteilhafterweise zugleich Fixierkörper 51; 51.1 bis 51.4 ausbilden oder enthalten, mit deren Hilfe die Messsonde 25 gegen Bewegungen relativ zu der Bohrung 22 fixiert werden kann. In den in den Figuren gezeigten bevorzugten Ausführungsbeispielen sind an den als Messfühlerträger 41.1 fungierenden Fixierkörpern 51; 51.1 bis 51.4 die jeweiligen taktilen Messtaster 26; 26.1 bis 26.4 befestigt, die also von den jeweiligen Fixierkörpern 51; 51.1 bis 51.4 getragen werden.

Es versteht sich jedoch, dass auch die optischen Sensoren 44 und/oder andere Messfühler an den Fixierkörpern 51; 51.1 bis 51.4 oder an anderen Fixierkörpern befestigt und von diesen getragen sein können. Es versteht sich außerdem, dass die Fixierkörper auch frei von Messfühlern sein können, so dass also die Funktion einer Fixierung der Messsonde relativ zu der Bohrung 22 des Werkstückes 24 einerseits und die Funktion einer Aufnahme und Bewegung der Messfühler mithilfe von Messfühlerträgern andererseits, getrennt werden kann.

Erfindungsgemäß ist vorgesehen, dass an dem Tragkörper 40 der Messsonde 25 wenigstens ein Messfühlerträger 41.1, 41.2 und/oder ein Fixierkörper 51; 51.1 bis 51.4 befestigt ist bzw. sind, der bzw. die mithilfe eines Mechanismus 45; 45.1, 45.2 von einer Einführ- und Entnahmestellung 46; 46.1, 46.2, in welcher die Messsonde 25 zusammen mit dem den Messfühler 42 tragenden Messfühlerträger 41.1, 41.2 und/oder zusammen mit dem Fixierkörper 51; 51.1 bis 51.4 4 vorzugsweise berührungslos in die Bohrung 22 einführbar und wieder aus der Bohrung 22 entnehmbar ist, in eine Messstellung 47; 47.1, 4.7.2 überführbar ist bzw. wird, in welcher eine Messung der Kennwerte der Bohrung 22 mithilfe des Messfühlers 42 möglich ist bzw. erfolgt, und gegebenenfalls umgekehrt und/oder in eine Fixierstellung 46 überführbar ist bzw. wird, in welcher der Fixierkörper 51; 51.1 bis 51.4 an der Oberfläche 23 der Bohrung 22 unter Ausübung von Druckkräften auf die Oberfläche 23 der Bohrung 22 an dieser abgestützt ist, so dass die Messsonde 25 in der Fixierstellung 56 des Fixierkörpers 51; 51.1 bis 51.4 gegen Bewegungen relativ zu der Bohrung 22 fixiert ist. Mit anderen Worten ist also die den Fixierkörper 51; 51.1 bis 51.4 enthaltende Messsonde 25 in der Fixierstellung 56 der Fixierkörper 51; 51.1 bis 51.4 in der Bohrung 22 eingespannt, so dass keine Relativbewegungen zwischen der Messsonde 25 und der Bohrung 22 auftreten können.

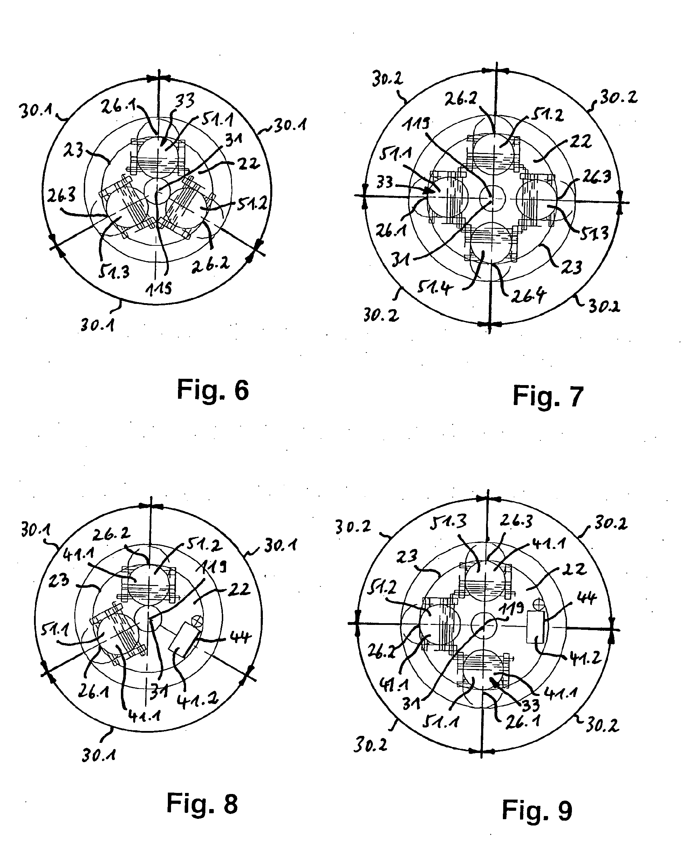

In den in den Figuren gezeigten Ausführungsbeispielen sind die als Fixierkörper 51; 51.1 bis 51.4 ausgebildeten Messfühlerträger 41.1 für die taktilen Messtaster 26; 26.1 bis 26.4 und die gegebenenfalls zusätzlich vorgesehenen Messfühlerträger 41.2 für die optischen Sensoren 44 (Figuren 8 und 11 bis 13) jeweils mittels zweier Lenker 58; 58.1 bis 58.4 an dem Tragkörper 40 angelenkt, so dass der jeweilige Messfühlerträger 41.1, 41.2 und/oder der jeweilige Fixierkörper 51; 51.1 bis 51.4 relativ zu dem Tragkörper 40 von seiner Einführ- und Entnahmestellung 46; 46.1, 46.2 in seine Messstellung 47; 47.1, 47.2 und/oder seine Fixierstellung 56 spreizbar ist bzw. gespreizt wird.

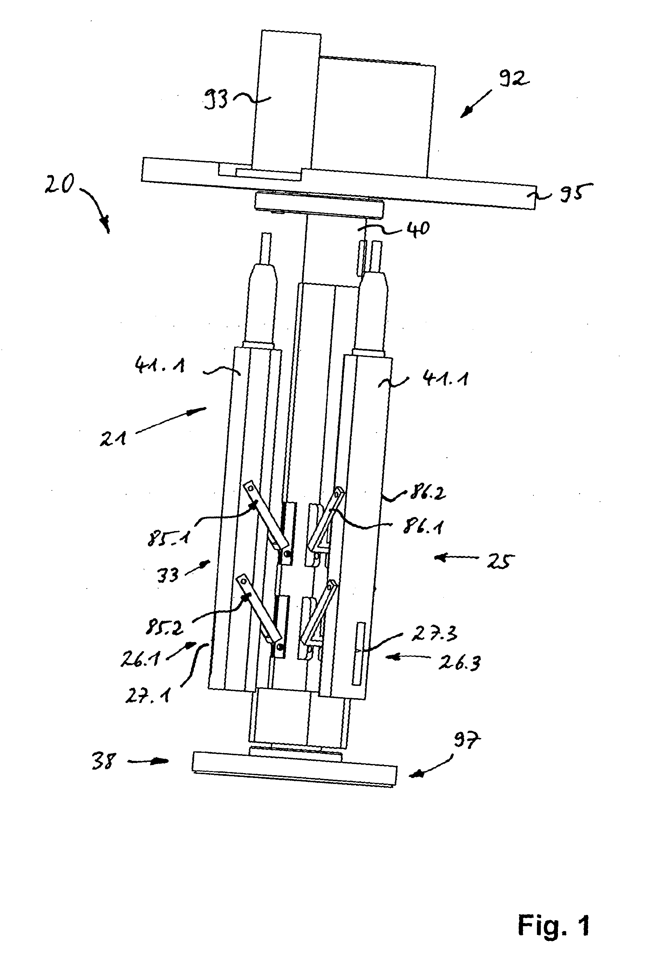

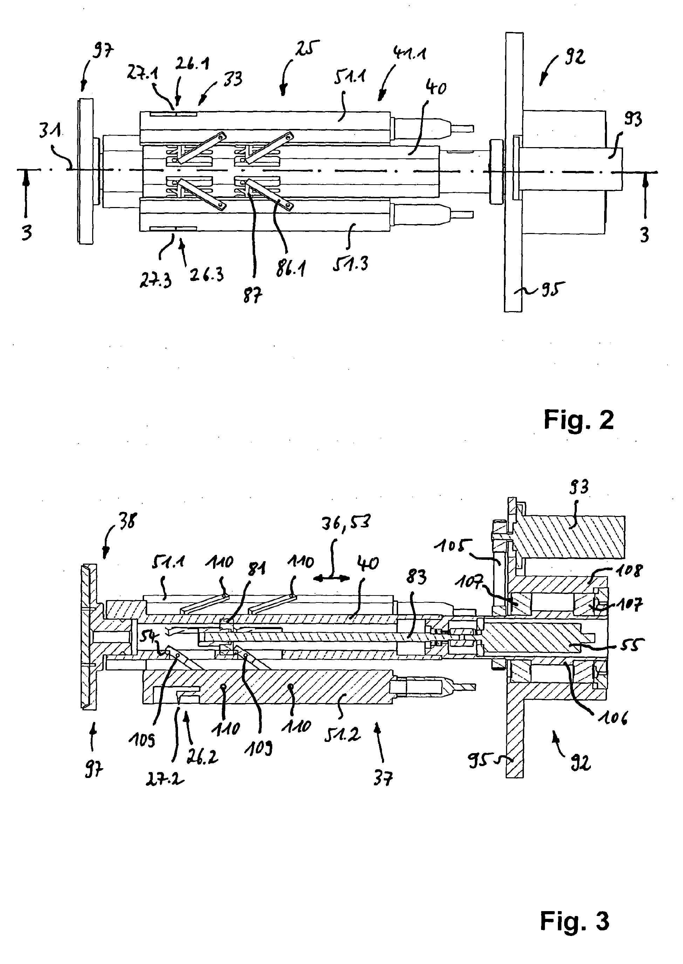

Wie in den Ausführungsbeispielen gemäß den Figuren 1 bis 6 gezeigt, kann die Messsonde 25 beispielsweise mit drei jeweils als Messfühlerträger 41.1 für die taktilen Messtaster 26.1 bis 26.3 fungierenden Fixierkörpern 51.1 bis 51.3 versehen sein, die über den Umfang der Messsonde 25 in hier gleichen Umfangswinkeln 30.1 von 120 Grad um die Längsachse 31 der Messsonde 25 beabstandet zueinander angeordnet sind. Außerdem sind in diesen Ausführungsbeispielen, aber auch in allen anderen, in den Figuren gezeigten Ausführungsbeispielen, die taktilen Messtaster 26.1 bis 26.4 und demgemäß auch die diese tragenden und als Messfühlerträger 41.1 fungierenden Fixierkörper 51.1 bis 51.4 koaxial zur Längsachse 31 der Messsonde 25 angeordnet.

Es versteht sich, dass abhängig von der Geometrie, insbesondere abhängig von dem Innendurchmesser 39 der Bohrung 22 auch mehr als drei Messfühler 42 bzw. mehr als drei als Messfühlerträger 41.1 fungierende Fixierkörper 51.1 bis 51.4 in einer einzigen Messsonde 25 integriert sein können. So sind beispielsweise in dem in den Figuren 7 bis 10 gezeigten Ausführungsbeispiel vier als Messfühlerträger 41.1 fungierende Fixierkörper 51.1 bis 51.4 vorgesehen, die jeweils einen taktilen Messtaster 26.1 bis 26.4 tragen und die in gleichen Umfangswinkeln 30.2 von 90 Grad um die Längsachse 31 der Messsonde 25 beabstandet zueinander angeordnet sind.

Es können jedoch auch, wie beispielsweise in Figur 8 schematisch gezeigt, nur zwei als Messfühlerträger 41.1 fungierende Fixierkörper 51.1, 51.2 mit jeweils einem taktilen Messtaster 26.1, 26.2 sowie zusätzlich ein Messfühlerträger 41.2 für einen optischen Sensor 44 vorgesehen sein, wobei diese Messfühler 42 respektive die beiden Fixierkörper 51.1 und 51.2 sowie der Messfühlerträger 41.2 für den optischen Sensor 44 in gleichen Umfangswinkeln 30.1 von 120 Grad um die Längsachse 31 der Messsonde 25 beabstandet zueinander angeordnet sein können.

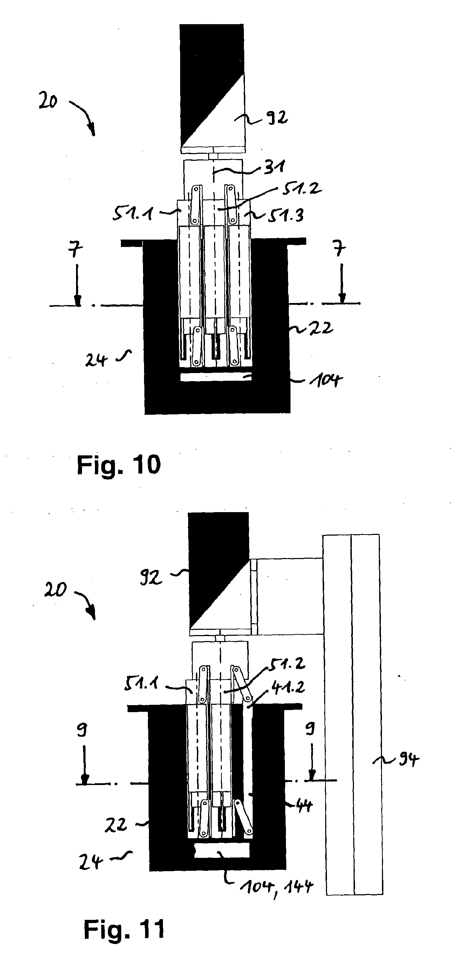

Schließlich kann auch, wie beispielsweise in den Figuren 9 und 11 gezeigt, eine Anordnung von Messfühlern 42 derart vorgesehen sein, dass drei als Messfühlerträger 41.1 für jeweils einen taktilen Messtaster 26.1 bis 26.3 fungierende Fixierkörper 51.1 bis 51.3 sowie zusätzlich ein Messfühlerträger 41.2 mit einem optischen Sensor 44 vorgesehen sein, wobei diese vier Messfühler 42, respektive die drei Fixierkörper 51.1 bis 51.3 und der Messfühlerträger 41.2 für den optischen Sensor 44 wiederum in gleichen Umfangswinkeln 30.2 von 90 Grad um die Längsachse 31 der Messsonde 25 beabstandet angeordnet sein können.

In dem in den Figuren 1 bis 6 gezeigten Ausführungsbeispiel, wo die Messsonde 25 ausschließlich mit als Messfühlerträger 41.1 für jeweils einen taktilen Messtaster 26.1 bis 26.3 fungierenden Fixierkörpern 51.1 bis 51.3 ausgestattet ist, wobei hier drei Fixierkörper 51.1 bis 51.3 und respektive wenigstens drei taktile Messtaster 26.1 bis 26.3 vorgesehen sind, sind diese drei Messfühlerträger 41.1 respektive diese drei Fixierkörper 51.1 bis 51.3 derart gekoppelt, dass sie gemeinsam von ihrer jeweiligen Einführ- und Entnahmestellung 46 in ihre jeweilige Messstellung 47 überführbar sind bzw. überführt werden, in welcher sich die Fixierkörper 51.1 bis 51.3 zugleich in ihrer jeweiligen Fixierstellung 56 befinden. Entsprechendes gilt auch für das in den Figuren 7 und 10 gezeigte Ausführungsbeispiel, wo vier als Messfühlerträger 41.1 für wenigstens vier taktile Messtaster 26.1 bis 26.4 fungierende Fixierkörper 51.1 bis 51.4 in einer einzigen Messsonde 25 integriert sind.

Wenn jedoch, wie in den Ausführungsbeispielen gemäß den Figuren 8, 9 und 11 bis 13 gezeigt, zusätzlich wenigstens ein Messfühlerträger 41.2 mit einem optischen Sensor 44 in der Messsonde 25 integriert ist, erfolgt die Koppelung der jeweiligen als Messfühlerträger 41.1 für die taktilen Messtaster 26 fungierenden Fixierkörper 51 über einen Mechanismus 45.1 und die Kopplung des hier einzigen Messfühlerträgers 41.2 für den optischen Sensor 44 erfolgt mittels eines weiteren Mechanismus 45.2 derart, dass die jeweiligen Fixierkörper 51 mit dem hier einzigen Messfühlerträger 41.2 für den optischen Sensor 44 nicht gekoppelt sind, während die jeweiligen Fixierkörper 51 untereinander nach wie vor derart gekoppelt sind, dass sie gemeinsam von ihrer jeweiligen Einführ- und Entnahme-Stellung 46, 46.1 in ihre jeweilige Fixierstellung 56, respektive in ihre jeweilige Messstellung 47, 47.1 überführbar sind bzw. überführt werden und gegebenenfalls umgekehrt.

In dem in den Figuren 1 bis 6 gezeigten Ausführungsbeispiel sind die Lenker 57.1, 57.2 um eine Drehachse 109 drehbar unmittelbar an dem Tragkörper 40 angelenkt und sind um eine Drehachse 110 drehbar unmittelbar an dem jeweiligen Fixierkörper 51.1 bis 51.3 angelenkt. Die Lenker 57.1, 57.2 sind hier als Doppellenker 85.1, 85.2 mit jeweils zwei Lenkerarmen 86.1, 86.2 gestaltet, die auf voneinander weg weisenden Seiten des jeweiligen Fixierkörpers 51 über die Drehachsen 110 um diese drehbar angelenkt sind. Die Lenkerarme 86.1, 86.2 sind starr miteinander über ein Querverbindungsstück 87 verbunden und erstrecken sich von diesem ausgehend in die gleiche Richtung und parallel zueinander. Mit dem Querverbindungsstück 87 ist, etwa mittig angeordnet, ein Hebelarm 54 starr verbunden, der sich davon ausgehend und gegenüber den Lenkerarmen 86.1, 86.2 in eine entgegengesetzte Richtung erstreckt. Der jeweilige Hebelarm 54 weist ein freies Betätigungs- bzw. Steuerende 89 auf. Dieses Steuerende 89 ist hier mit einem quer vorstehenden Steuernocken 88.1 gestaltet, an dem ein in Längsrichtung 36 der Messsonde 25 bewegbares Steuerelement 80 zur Anlage bringbar ist, um den jeweiligen Lenker 57.1, 57.2 zu betätigen bzw. auszulenken.

Die, in den Figuren 1 bis 6 gezeigten Lenker 57.1, 57.2, aber auch die insbesondere in den Ausführungsbeispielen gemäß den Figuren 12 und 13 gezeigten Lenker 58.1 bis 58.4 sind also mittels eines in Längsrichtung 36 der Messsonde 25 bewegbaren Steuerelements 80 um ihre jeweils fest mittelbar oder unmittelbar mit dem Tragkörper 40 verbundene Drehachse 109 bzw. 111 drehbar, so dass bei einer Bewegung des Steuerelements 80 in Längsrichtung 36 der Messsonde 25 der jeweilige, einen Messfühlerträger 41.1 für die taktilen Messtaster 26 ausbildende Fixierkörper 51 und/oder der Messfühlerträger 41.2 für den optischen Sensor 44, von seiner bzw. ihrer Einführ- und Entnahmestellung 46; 46.1, 46.2 in seine bzw. ihre Fixierstellung 56 und/oder Messstellung 47; 47.1, 47.2 bewegbar sind bzw. bewegt werden.

Bei dem Steuerelement 80 handelt es sich in den gezeigten Ausführungsbeispielen um eine mit einem Innengewinde versehene Mutter 81, die an dem Tragkörper 40 in Längsrichtung 36 der Messsonde 25 axial verschieblich geführt, jedoch gegen eine Drehung um die Längsachse 31 der Messsonde 25, respektive um die Längsachse des Tragkörpers 40 gesichert ist und die auf einer ein passendes Außengewinde 84 aufweisenden Spindel 83 aufgenommen ist. Die Spindel 83 ist hier bevorzugt in dem als Rohr gestalteten Tragkörper 40 aufgenommen und deren Längsachse fällt mit der Längsachse 31 der Messsonde 25 zusammen.

Die Spindel 83 ist mittels eines Motors 55 um ihre Längsachse 31 drehbar, der an dem von dem Einführende 38 der Messsonde 25 weg weisenden Ende der Spindel 83 angeordnet ist und der mit dieser vorzugsweise über eine Kupplung gekoppelt ist. Der Motor 55 ist hier fest mit einem nicht in die Bohrung 52 einzuführenden Lagerteil 106 verbunden, der wiederum fest mit dem Tragkörper 40 verbunden ist. Dieser Lagerteil 106 ist über Lager 107 an einer Lageraufnahme 108 einer auch als Fixierbrille bezeichneten Fixiereinrichtung 95 gelagert. Auf diese Weise kann die Messsonde 25 um ihre Längsachse 31 relativ zu dem die Fixiereinrichtung 95 und die Lageraufnahme 108 enthaltenden Messkopfteil 92 beliebig, d. h. um wenigstens 360 Grad und in entgegengesetzte Drehrichtungen motorisch gedreht werden. Zu diesem Zwecke ist mit dem Messkopfteil 92 ein weiterer Motor 93 fest verbunden, der über ein Antriebs-Zahnrad einen Zahnriemen 105 antreibt, der wiederum mit einem den Lagerteil 106 umschließenden Abtriebs-Zahnrad in Eingriff steht, so dass eine Drehung des Antriebs-Zahnrades mittels des Motors 93 zu einer Drehung der Messsonde 25 um ihre Längsachse 31 führt. Die Fixiereinrichtung 95 kann vorzugsweise mithilfe von in passende Bohrungen eingreifenden Fixierstiften lagerichtig und zentriert an dem die zu prüfende Bohrung 22 enthaltenden Werkstück 24 lösbar befestigt werden und kann außerdem gegebenenfalls mit zusätzlichen Fixier- und/oder Klemmmitteln dort befestigt werden. Auf diese Weise kann also die Messsonde 25 über den die Fixiereinrichtung 95 aufweisenden Messkopfteil 92 des Messkopfes 21 fest mit dem Werkstück 24 verbunden sein bzw. werden.

Wenn die Spindel 83 mithilfe des Motors 55 um ihre Längsachse 31 in eine Drehung versetzt wird, welche eine Bewegung des als Mutter 81 gestalteten Steuerelements 80 hier in Richtung von dem Einführende 38 der Messsonde 25 weg verursacht, kommt die Mutter 81 an dem freien Ende des Hebelarms 54, respektive an dessen Steuernocken 88.1 zur Anlage. Im Zuge einer weiteren Drehung des Motors 55 in derselben Drehrichtung, kommt es dementsprechend zu einer weiteren Axialbewegung der Mutter 81 in Richtung des Motors 55 und demgemäß zu einer Drehung der Lenker 57.1, 57.2 um ihre Drehachsen 109 derart, dass diese ausgehend von einer der Einführ- und Entnahmestellung der Fixierkörper 51.1 bis 51.3 entsprechenden Stellung in eine zweite Stellung verschwenkt werden, in welcher sich die Fixierkörper 51.1 bis 51.3 dann in einem größeren Abstand zu dem Tragkörper 40 befinden und in welcher sich die Fixierkörper 51.1, 51.3 sich Ausübung von Druckkräften auf die Oberfläche 23 der Bohrung 22 an dieser abstützen, sich also dann in ihrer jeweiligen Fixierstellung 56 befinden. In dieser Fixierstellung 56 können dann die Mikrostrukturmessungen an der Oberfläche 23 der Bohrung 22 mithilfe der hier drei taktilen Messtaster 26.1 bis 26.3 vibrations- bzw. schwingungsgedämpft durchgeführt werden.

Zum Zwecke einer Neupositionierung der Messsonde 25 für weitere Mikrostrukturmessungen oder zum Zwecke einer Entnahme der Messsonde 25 aus der Bohrung 22, kann beispielsweise der Motor 55 abgeschaltet werden oder kann die Verbindung zwischen dem Motor und der Spindel 83 beispielsweise im Bereich der Kupplung gelöst werden, so dass dann die jeweiligen Fixierkörper 56 unterstützt durch jeweils eine in den Figuren 1 bis 6 nicht näher gezeigte Feder automatisch in ihre Einführ- und Entnahmestellung 46 zurückgeführt werden können, wie sie beispielsweise in Figur 4 gezeigt ist. Zu diesem Zwecke kann die Spindel 83 vorzugsweise mit einem nicht selbsthemmenden Außengewinde 84 versehen sein.

Ein alternatives Ausführungsbeispiel einer Lenkergestaltung und Lenkeranordnung ist in den Figuren 12 und 13 gezeigt. Dort sind die jeweiligen Messfühlerträger 41.1, 41.2 zwar ebenfalls mithilfe zweier Lenker 58.1, 58.2 sowie 58.3, 58.4 an dem Tragkörper 40 angelenkt, jedoch dort jeweils mittelbar über einen Hilfslenker 59.1 bis 59.4, der einerends um eine fest mit dem Tragkörper 40 verbundene Drehachse 116 an dem Tragkörper 40 drehbar angelenkt ist und der andernends um eine Drehachse 111 drehbar an dem jeweiligen Hauptlenker bzw. Lenker 58.1 bis 58.4 angelenkt ist. Diese Lenker 58.1 bis 58.4 erstrecken sich ausgehend von der Drehachse 111 in hier entgegengesetzte Richtungen, und zwar mit einem ersten Lenkerarm 60.1 und mit einem zweiten Lenkerarm 60.2. Der jeweilige Lenker 58.1 bis 58.4 ist mit seinem Lenkerarm 60.2 über eine im Bereich dessen Endes und in einem Abstand zu der Drehachse 111 angeordnete Drehachse 113 an dem jeweiligen Messfühlerträger 41.1, 41.2 um diese drehbar angelenkt, während der andere Lenkerarm 60.1 des jeweiligen Lenkers 58.1 bis 58.4 um eine ebenfalls in einem Abstand zu der Drehachse 111 angeordnete Drehachse 112 drehbar an dem Tragkörper 40 angelenkt ist. Diese Drehachse 112 ist relativ zu dem Tragkörper 40 in dessen Längsrichtung 53 verschieblich an dem Tragkörper 40, hier in einem Längsschlitz geführt. An dem Ende des ersten Lenkerarmes 60.1 ist jeweils ein quer vorstehender Steuernocken 88.2 angebracht, an dem wiederum eine mit einem Innengewinde versehene Mutter 81, die auf einer ein passendes Außengewinde aufweisenden Spindel 83 aufgenommenen ist, wahlweise zur Anlage bringbar ist. Dies bedeutet in dem gezeigten Ausführungsbeispiel, dass mithilfe der ein Steuerelement 80 für die Lenker 58.1 bis 58.4 ausbildenden Mutter 81 entweder die mit dem bzw. den Fixierkörpern 51 verbundenen Lenker 58.1, 58.2 oder die mit dem Messfühlerträger 41.2 oder den Messfühlerträgern für jeweils einen optischen Sensor 44 verbundenen Lenker 58.3, 58.4 von ihrer jeweiligen Einführ- und Entnahmestellung 46.1, 46.2 in ihre jeweilige Fixierstellung 56 und zugleich Messstellung 47.1, bezogen auf den bzw. die einen Messfühlerträger 41.1 für den bzw. die taktilen Messtaster 26 ausbildenden Fixierkörper 51 bzw. zugleich in eine Messstellung 47.2 des Messfühlerträgers 41.2 bzw. der Messfühlerträger für den optischen Sensor 44 bzw. für die optischen Sensoren überführbar sind.

Die jeweilige Rückbewegung, d. h. die Bewegung der jeweiligen Messfühlerträger 41.1, 41.2 von ihrer jeweiligen Messstellung 47.1, 47.2 in ihre jeweilige Einführ- und Entnahmestellung 46.1, 46.2 erfolgt jeweils selbsttätig mithilfe von Federn 90, 91. Dabei ist die Feder 90 den Lenkern 58.1, 58.2 für den einen Messfühlerträger 41.1 für den taktilen Messtaster 26 ausbildenden Fixierkörper 51 zugeordnet, während die Feder 91 den an dem Messfühlerträger 51.2 für den optischen Sensor 44 angelenkten Lenkern 58.3, 58.4 zugeordnet ist. Diese Federn 90 und 91 sind in den Figuren 12 und 13 jeweils schematisch in Verbindung mit einem Kraftpfeil eingezeichnet, der jeweils in unterschiedliche, hier in entgegengesetzte Richtungen weist.

In der Darstellung gemäß Figur 12 befindet sich die Mutter 81 in einer Stellung, in welcher sie an dem Steuernocken 88.2 des Lenkers 58.1 für den Fixierkörper 51 anliegt, wobei der Fixierkörper 51 in dieser Stellung der Mutter 81 in seine Messstellung 47.1 und zugleich seine Fixierstellung 56 überführt ist, in welcher der Fixierkörper 51 hier mittels zweier Anlageelemente 66.1, 66.2 eines Stützkörpers 65 an der Oberfläche 23 der Bohrung 22 anliegt. Wird nun die Mutter 81, ausgehend von der in Figur 12 gezeigten Stellung auf der Spindel 83 durch entsprechende Drehung der Spindel 83 nach links bewegt, so werden die Drehachsen 112 der an dem Fixierkörper 51 über die Drehachsen 113 angelenkten Lenker 58.1, 58.2 in den zugehörigen Schlitzen 118 in Richtung des Kraftpfeils der Feder 90 bewegt, so dass zugleich die Lenker 58.1, 58.2 um ihre Drehachse 111 relativ zu dem jeweiligen Hilfslenker 59.1, 59.2 bis in eine Stellung gedreht werden, wie sie in Figur 13 gezeigt ist und in welcher sich der Fixierkörper 51 in einer Einführ- und Entnahmestellung 46.1 befindet. Im Zuge einer weiteren Drehung der Spindel 83 in der gleichen Drehrichtung und dementsprechend einer weiteren Transversalbewegung der Mutter 81 in einer Richtung von dem Steuernocken 88.2 des Lenkers 58.1 weg, gelangt die andere Seite der Mutter 81 in Kontakt mit dem Steuernocken 88.2 des an dem Messfühlerträger 41.2 für den optischen Sensor 44 angelenkten Lenkers 58.4. Im Zuge dieser weiteren Bewegung der Mutter 81 wird dieser Lenker 58.4 ausgehend von der in Figur 12 gezeigten Stellung, in welcher sich der Messfühlerträger 41.2 für den optischen Sensor 44 in einer Einführ- und Entnahmestellung 46.2 befindet, in die in Figur 13 gezeigte Messstellung 47.2 überführt. In dieser Messstellung 47.2 liegen die beiden als Abstands- und Stützelemente 61.1, 61.2 fungierenden Rollen 63.1, 63.2, die um die miteinander fluchtenden Drehachsen 64.1 und 64.2 drehbar sind und die in dieser Messstellung 47.2 parallel zu der Oberfläche 23 der Bohrung 22 angeordnet sind, an der Oberfläche 23 der Bohrung 22 an, so dass in dieser Messstellung 47.2 ein durch die Radien der Rollen 63.1, 63.2 bestimmter Abstand 62 zwischen dem optischen Sensor 44 und der Oberfläche 23 der Bohrung 22 eingestellt ist. In diesem vorherbestimmten Abstand 62 kann also dann die Messsonde 25 zusammen mit ihrem wenigstens einen optischen Sensor 44 um ihre Längsachse 31 vorzugsweise mithilfe des Motors 93 beliebig, d. h. insbesondere um wenigstens 360 Grad und in entgegen gesetzte Drehrichtungen gedreht werden, so dass in der jeweils eingestellten Höhe bzw. Tiefe die Oberfläche 23 der Bohrung vollumfänglich optisch geprüft werden kann.

In der besagten Messstellung 47.2 des Messfühlerträgers 41.2 für den optischen Sensor 44 befindet sich der Fixierkörper 51 zusammen mit dem taktilen Messtaster 26 in einer Einführ- und Entnahmestellung 46.1, d. h. in einem Abstand zu der Oberfläche 23 der Bohrung 22, so dass im Zuge einer optischen Inspektion der Oberfläche 23 der Bohrung 22 insbesondere die empfindliche Tastspitze 27 des taktilen Messtasters 26 nicht beschädigt werden kann. Die Messfühlerträger für die optischen Sensoren 44 können gemäß einer bevorzugten Ausgestaltung mit einem ersten Trägerteil 77 und aus einem zweiten Trägerteil 78 gestaltet sein, die vorzugsweise über eine Blattfeder 76 federnd miteinander gekoppelt sind. Der erste Trägerteil 77 umfasst bzw. trägt dann die Drehachsen 113 der Lenker 58.3, 58.4 und der zweite Trägerteil 78 trägt dann vorzugsweise unmittelbar den optischen Sensor.

Die genaue Konstruktion des als Messfühlerträger 41.1 fungierenden Fixierkörpers 51 und des von diesem getragenen taktilen Messtasters 26 ist insbesondere in den Figuren 14 bis 16 gezeigt. Der Fixierkörper 51 umfasst einen Vorschubkörper 29, in bzw. an dem eine Vorschubeinrichtung 35 mit einem nicht näher gezeigten Motor aufgenommen ist, mit deren bzw. dessen Hilfe der taktile Messtaster 26 zum Zwecke einer Erfassung der Mikrostruktur der zu prüfenden Oberfläche 23 der Bohrung 22 in Längsrichtung 36 der Messsonde in einer die Längsachse 119 der Bohrung 22 bzw. die Längsachse 31 der Messsonde 25 enthaltenen Ebene bewegbar ist bzw. bewegt wird.

Der taktile Messtaster 26 umfasst einen lang gestreckten Tastarm 49, der an der Vorschubeinrichtung 35 um eine Drehachse 103 drehbar angelenkt ist. Der Tastarm 49 weist an seinem von der Vorschubeinrichtung 35 weg weisenden Ende eine sich quer, vorzugsweise senkrecht zu dem Tastarm 49 erstreckende Tastnadel 48 auf. Die Tastnadel 48 weist an ihrem freien Ende eine Tastspitze 27 zur Erfassung der Mikrostruktur der zu prüfenden Oberfläche 23 der Bohrung 22 auf. Die Tastspitze 27 des Tastarms 49 liegt während der Mikrostrukturmessung unterstützt durch die Federkraft einer Feder 102 an der Oberfläche 23 der Bohrung 22 an, die in der Figur 15 schematisch mit ihrem Kraftpfeil angedeutet ist.

Die Vorschubeinrichtung 35 ist über eine hier als Blattfeder gestaltete weitere Feder 73 an dem Vorschubkörper 29 befestigt und ist von diesem getragen. Der durch diese Feder 73 ausgeübte Kraftpfeil ist in Figur 15 im Zusammenhang mit der dort nochmals schematisch dargestellten Feder 73 eingezeichnet. Dieser Kraftpfeil weist gegenüber dem Kraftpfeil der Feder 102 in eine entgegengesetzte Richtung.

Die Vorschubeinrichtung 35 trägt außer dem die Tastnadel 48 enthaltenden Tastarm 49 auch noch einen Gleitkufenarm 71. Der Gleitkufenarm 71 kann mithilfe der Vorschubeinrichtung 35 gleichzeitig, d. h. simultan zusammen mit dem Tastarm 49 in eine Richtung bewegt werden. Der Gleitkufenarm 71 weist an seinem von der Vorschubeinrichtung 35 weg weisenden Ende eine im Bereich der Tastspitze 27 des taktilen Messtasters 26 angeordnete Gleitkufe 72 auf. Diese Gleitkufe 72 wird durch die Federkraft der Feder 73 auf eine hier planebene Referenzoberfläche 74 eines Referenzkörpers 75 angedrückt. Die Referenzoberfläche 74 weist in der Fixierstellung 56 des Fixierkörpers 51 in Richtung der Oberfläche 23 der Bohrung 22 und ist in dieser Fixierstellung 56 parallel zu der Oberfläche 23 der Bohrung 22 angeordnet.

Der Referenzkörper 75 ist von einem Stützkörper 65 getragen, der im Bereich der Tastspitze 27 des taktilen Messtasters angeordnet ist und über den sich der Fixierkörper 51 in seiner Fixierstellung 56 auf der Oberfläche 23 der Bohrung 22 abstützt. Zu diesem Zwecke weist der Stützkörper 65 hier zwei in einem Abstand zueinander angeordnete Anlageelemente 66.1, 66.2 auf, die hier starr miteinander verbunden sind. Die Anlageelemente 66.1 und 66.2 sind in der Fixierstellung 56 des Fixierkörpers 51 in einer gemeinsamen Ebene 67 angeordnet, welche parallel zu der Längsachse 119 der Bohrung 22 ausgebildet ist und welche die Längsachse 119 der Bohrung 22 enthält. Der Stützkörper 65 ist über ein Pendellager 69 um eine Drehachse 70 drehbar an dem Vorschubkörper 29 angelenkt und ist von diesem getragen. Die Drehachse 70 ist in der Fixierstellung 56 des Fixierkörpers etwa senkrecht zu der Längsachse 119 der Bohrung 22 angeordnet. Der Stützkörper 65 ist lösbar mit dem Vorschubkörper 29 verbunden, so dass der Stützkörper 65 bei Bedarf ausgewechselt werden kann.

Zum Zwecke einer vorteilhaften Schwingungsdämpfung ist die Tastspitze 27 des taktilen Messtasters 26 zumindest in der Fixierstellung 56 des Fixierkörpers 51 zwischen den beiden dann an der Oberfläche 23 der Bohrung 22 anliegenden Anlageelementen 66.1 und 66.2 angeordnet und wird dort während der Durchführung der Mikrostrukturmessung an der Oberfläche 23 der Bohrung 22 anliegend entlang bewegt, und zwar in einem Messbereich 68, der sich zwischen den beiden Anlageelementen 66.1 und 66.2 befindet. Der Messbereich 68 ist also vorzugsweise auf einen Bereich zwischen den Anlageelementen 66.1 und 66.2, respektive deren Anlagestellen auf der Oberfläche 23 der Bohrung 22 beschränkt, ist also hinsichtlich seiner Längenausdehnung vorzugsweise kleiner als der Abstand zwischen den beiden Anlageelementen 66.1, 66.2, respektive kleiner als der Abstand zwischen deren Anlagestellen auf der Oberfläche 23 der Bohrung 22.

Die Messvorrichtung 20 weist an dem Einführende 38 der Messsonde 25 eine Reinigungsvorrichtung 97 zur Reinigung, insbesondere zum Abblasen und/oder zum Abstreifen der Oberfläche 23 der Bohrung 22 auf, um diese Oberfläche insbesondere vor der Durchführung einer Mikrostrukturmessung reinigen zu können. Eine derartige Reinigungsvorrichtung 97 ist zweckmäßigerweise an dem Tragkörper 40 lösbar befestigt, kann also abhängig von den Reinigungsaufgaben und/oder abhängig von den Messgegebenheiten, insbesondere abhängig von dem Innendurchmesser 39 der Bohrung 22 ausgewechselt werden.

Gemäß dem in den Figuren 1 bis 5 gezeigten bevorzugten Ausführungsbeispiel ist die Reinigungsvorrichtung 97 mit einer aus zwei Kreisscheibenteilen 98.1 und 98.2 gebildeten Kreisscheibe 98 gestaltet, die einen Außendurchmesser 101 aufweist, der vorzugsweise geringfügig kleiner ist als der Innendurchmesser 39 der Bohrung 22. Die Kreisscheibe 98 ist mit einem nach außen offenen Ringschlitz 99 gestaltet, durch den Luft und/oder Gas zum Zwecke eines Abblasens der Oberfläche 23 der Bohrung 22 hindurch führbar ist bzw. wird. Die Luft und/oder das Gas kann durch einen zweckmäßigerweise in dem als Rohr gestalteten Tragkörper 40 geführten, nicht näher gezeigten Schlauch zugeführt werden, der an der zentralen Öffnung 120 der Reinigungsvorrichtung 97 angeschlossen sein kann. Der eine Kreisscheibenteil 98.1 ist gegenüber dem anderen Kreisscheibenteil 98.2 mithilfe von Abstandshaltern 100 unter Ausbildung des Ringschlitzes 99 in einem Abstand zueinander angeordnet, so dass sich durch die zentrale Öffnung 120 einströmende Luft und/oder dort einströmendes Gas in dem Zwischenraum zwischen den beiden Kreisscheibenteilen 98.1 und 98.2 ausbreiten kann und anschließend über den hier vollumfänglich nach außen offenen Ringschlitz 99 hier schräg in Richtung der Oberfläche 23 der benachbarten Bohrung ausgeleitet werden kann.

Es versteht sich, dass die Reinigungsvorrichtung alternativ oder zusätzlich mit einem umlaufenden Abstreifer versehen sein kann, der vorzugsweise mit einem Abstreifergummi und/oder mit Abstreiferborsten gestaltet sein kann. Es versteht sich ferner, dass die Messsonde 25 relativ zu dem fest mit ihr verbundenen Messkopfteil 92 auch mittels eines Motors längs der Längsachse 119 der Bohrung bewegbar ist bzw. bewegt werden kann. Dieser Motor kann auch dazu dienen, die taktilen Messtaster 26 zum Zwecke der Erfassung der Mikrostruktur der Oberfläche 23 der Bohrung 22 in Längsrichtung der Bohrung 22 zu bewegen, so dass also gegebenenfalls die separaten und von dem jeweiligen Fixierkörper 51 getragenen Vorschubeinrichtungen 35 entfallen können. Mit anderen Worten kann also auch vorgesehen sein, dass die taktilen Messtaster 26 zum Zwecke der Erfassung der Mikrostruktur der Oberfläche 23 der Bohrung 22 ausschließlich mittels des vorgenannten Motors in Längsrichtung der Bohrung 22 bewegt werden.

In weiter vorteilhafter Ausgestaltung ist es möglich, mehrere erfindungsgemäße Vorrichtungen 20 zum Messen der Mikrostruktur von Oberflächen 23 von Bohrungen 22 in einer gemeinsamen Messstation zusammenzufassen, wobei die Mikrostruktur der Oberflächen 23 der mehreren Bohrungen 22 vorzugsweise simultan mittels der Messvorrichtungen 20 der Messstation gemessen werden.

Mithilfe einer oder mehrerer der vorstehend beschriebenen Messvorrichtungen 20 lässt sich das erfindungsgemäße Verfahren zum Messen der Mikrostruktur, insbesondere der Rauheit von Oberflächen 23 von zylindrischen Bohrungen 22 von Werkstücken 24, beispielsweise von Motorzylindern 28 durchführen. Dabei kann mithilfe der einen Messkopf 21 aufweisenden Messvorrichtung 20, welche eine in die Bohrung 22 einführbare Messsonde mit mehreren taktilen Messtastern 26 mit jeweils wenigstens einer Tastspitze 27 zur Erfassung der Mikrostruktur der Oberfläche 23 der Bohrung 22 aufweist, die Mikrostruktur der Oberfläche 23 der Bohrung 22 mithilfe der mehreren Tastspitzen 27 der mehreren taktilen Messtaster 26 der diese Messtaster 26 enthaltenden Messsonde 25, insbesondere im Takt einer Produktionslinie vorzugsweise simultan von mehreren taktilen Messtastern 26 erfasst werden.

Zur Durchführung dieses Messverfahrens kann die beispielsweise an einem Gestell 94 oder mithilfe der Fixiereinrichtung 95 unmittelbar an dem Werkstück 24 befestigte Messsonde 25 des Messkopfes 21 manuell, elektronisch oder softwaregesteuert mit dem Einführende 38 der Messsonde 25 voran in die Zylinderbohrung 22 eingeführt werden. Dabei befinden sich die Messfühlerträger 41.1 für die taktilen Messtaster 26.1 bis 26.4 und der oder die gegebenenfalls zusätzlich vorgesehenen Messfühlerträger 51.2 für einen oder mehrere optische Sensoren 44 in einer Einführ- und Entnahmestellung 46; 46.1, 46.2. Diese befinden sich dann also in einer in Richtung des zentralen Tragkörpers 40 oder an diesen angelegten Stellung, in welcher die Messsonde 25 berührungsfrei in die Bohrung 22 eingeführt werden kann. Nach dem Einstellen bzw. Erreichen einer bestimmten Messhöhe bzw. -tiefe werden zum Zwecke einer Erfassung der Mikrostruktur der Oberfläche 23 der Bohrung 22 mithilfe der taktilen Messtaster 26, deren jeweilige als Messfühlerträger 41.1 fungierenden Fixierkörper 51.1 bis 51.4 von ihrer jeweiligen Einführ- und Entnahmestellung 46.1 in ihre jeweilige Messstellung 47.1 und zugleich ihre jeweilige Fixierstellung 56 überführt, in welcher eine Messung der Kennwerte der Bohrung 23 mithilfe der taktilen Messtaster 26 möglich ist bzw. erfolgt, wobei die Fixierkörper 51.1 bis 51.4 zur Fixierung der Messsonde 25 relativ zu der Bohrung 22 dienen. Die Fixierkörper 51.1 bis 51.4 werden mithilfe eines Mechanismus 45; 45.1 von einer Einführ- und Entnahmestellung 46; 46.1 in eine Fixierstellung 56 überführt, in welcher sie sich an der Oberfläche 23 der Bohrung 23 unter Ausübung von Druckkräften auf die Oberfläche der Bohrung 22 an dieser abstützen, so dass dann die Messsonde 25 in der Fixierstellung 56 gegen Bewegungen relativ zu der Bohrung 22 fixiert ist. Wenn also gemäß dieser bevorzugten Verfahrensvariante die als Messfühlerträger 51.1 für die taktilen Messtaster 26 dienenden Fixierkörper 51 fest an der Zylinderwand bzw. der Oberfläche 23 der zylindrischen Bohrung 22 unter Fixierung bzw. Einspannung der gesamten Messsonde 25 relativ zu der Bohrung 22 fest anliegen, kann die eigentliche Mikrostrukturprofilmessung der Oberfläche 23 der Bohrung 22 mithilfe der taktilen Messtaster 26.1 bis 26.4 durchgeführt werden. Dies kann dadurch erreicht werden, dass die mit jeweils wenigstens einer Tastspitze 27.1 bis 27.4 versehenen taktilen Messtaster 26.1 bis 26.4 mithilfe ihrer jeweiligen Vorschubeinrichtung 35 simultan über die Oberfläche 23 der Bohrung 22 bewegt bzw. gezogen werden und dabei die Mikrostruktur der Oberfläche 23 mithilfe der Tastspitzen 27.1 bis 27.4 der taktilen Messtaster 26.1 bis 26.4 erfasst wird. Anschließend können die taktilen Messtaster 26.1 bis 26.4, respektive deren als Messfühlerträger 41.1 dienende Fixierkörper 51.1 bis 51.4, mithilfe des Mechanismus 45; 45.1 radial von der Oberfläche 23 der Bohrung etwas zurück gezogen werden, so dass dann die gesamte Messsonde 25 durch Drehung in Umfangrichtung und/oder durch Bewegung in Achsrichtung zur nächsten vorzugsweise vorprogrammierten Messposition gefahren werden kann. Auf diese Weise kann also Mikrostruktur der Oberfläche 23 der Bohrung 22 eines Werkstücks 24 mithilfe von mehreren taktilen Messtastern 26.1 bis 26.4 auch und gerade integriert in eine die Produktion dieses Werkstückes 24 betreffende Produktionslinie im Rahmen des dabei geforderten zeitlichen Taktes mit der erforderlichen statistischen Aussagekraft erfasst bzw. gemessen werden.

Eine Inspektion bzw. Abtastung der Oberfläche 23 der Bohrung 22 auf Defekte oder die optische Erfassung einer Honstruktur der Bohrung 22 wird man sinnvollerweise in einem getrennten Vorgang durchführen, beispielsweise nach der Durchführung der Mikrostrukturmessung. Zu diesem Zwecke kann die Messsonde 25 in einer gewünschten axialen Höhe bzw. Tiefe innerhalb der Bohrung 22, beispielsweise um einem vollen Umfang, das heißt um wenigstens 360 Grad, gedreht werden und dabei die optische Prüfung durchgeführt werden. Es versteht sich, dass die Vorrichtung 20 auch mit weiteren Datenaufnahmemodulen bzw. Sensoren ausgerüstet sein kann, beispielsweise mit wenigstens einem Vibrationssensor und/oder mit wenigstens einem Temperatursensor und/oder mit wenigstens einer Kamera 104.

Mit der erfindungsgemäßen Vorrichtung 20 können auch vorteilhaft etwaige Vibrationen der Messsonde 25 und/oder der Oberfläche 23 der Bohrung 22 gemessen werden. Zu diesem Zwecke kann die Messsonde 25 mit einem Vibrationsmessfühler 33 zur Messung derartiger Vibrationen ausgestattet sein. Dafür kann gemäß einer vorteilhaften Ausgestaltung wenigstens einer der taktilen Messtaster 26.1 als ein derartiger Vibrationsmessfühler 33 eingesetzt werden. Die Messung der Vibrationen kann dann beispielsweise derart erfolgen, dass die Tastspitze 27.1 des als taktiler Messtaster 26.1 ausgebildeten Vibrationsmessfühlers 33 während der Messung, also zeitparallel zu der Messung der Mikrostruktur der Oberfläche 23 der Bohrung 22 mithilfe wenigstens eines weiteren taktilen Messtasters 26.2 bis 26.4, relativ zu der Oberfläche 23 der Bohrung 22 zumindest in Längsrichtung der Bohrung 22 fixiert gehalten wird, während zeitparallel dazu die Tastspitze 27.2 bis 27.4 des wenigstens einen weiteren taktilen Messfühlers 26.2 bis 26.4 zum Zwecke der Erfassung der Mikrostruktur der Oberfläche 23 der Bohrung 22 entlang derselben vorzugsweise in deren Längsrichtung bewegt wird. Zu diesem Zwecke können alle taktilen Messtaster 26.1 bis 26.4 vorzugsweise an als Messfühlerträger 41.1 dienenden Fixierkörpern 51.1 bis 51.4 befestigt sein und von diesen getragen sein. Diese Fixierkörper 51.1 bis 51.4 sind dann während der Vibrationsmessung und während der zeitparallel möglichen Messung der Mikrostruktur der Oberfläche 23 der Bohrung 22 jeweils in ihre Fixierstellung 56 überführt, in der also die Fixierkörper 51.1 bis 51.4 und die Messsonde 25 gegen Bewegungen relativ zu der Bohrung 22 fixiert bzw. eingespannt gehalten sind. Dann kann zum Zwecke der Vibrationsmessung derjenige taktile Messtaster 26.1, welcher als ein Vibrationsmessfühler 23 dient, mit seiner Tastspitze 27.1 an die Oberfläche 23 der Bohrung 22 angelegt werden, ohne dass dessen Tastspitze 27.1 über die Oberfläche 23 der Bohrung 22 bewegt werden muss bzw. wird, um etwaig auftretende Vibrationen der Messsonde 25 und/oder der Oberfläche 23 der Bohrung 22 zu erfassen bzw. zu messen. Die gegebenenfalls vorhandene Vorschubeinrichtung 35 für diesen taktilen Messtaster 26.1 bleibt also für die Vibrationsmessung vorzugsweise außer Betrieb. Im Unterschied dazu können vorteilhafterweise zeitparallel zu der Vibrationsmessung mittels dieses als Vibrationsmessfühler 33 fungierenden taktilen Messtasters 26.1 die anderen taktilen Messtaster 26.2 bis 26.4 mithilfe der diesen jeweils zugeordneten Vorschubeinrichtung 35 vorzugsweise in Längsrichtung 36 der Messsonde 25 bewegt werden, wobei also ihre zugehörigen Fixierkörper 51.2 bis 51.4 gegen Bewegungen relativ zu der Oberfläche 23 der Bohrung 22 fixiert gehalten werden. Auf diese vorteilhafte Art und Weise können also während der Durchführung einer Mikrostrukturmessung der Oberfläche 23 der Bohrung 22 zugleich etwaige Vibrationen der Messsonde 25 und/oder der Oberfläche 23 der Bohrung 22 eines Werkstücks 24 gemessen werden, so dass etwaig während der Mikrostrukturmessung auftretende Vibrationen mithilfe des Vibrationsmessfühlers 33 erfasst und beispielsweise mithilfe geeigneter rechnergestützter Verfahren herausgerechnet werden kann, so dass im Ergebnis eine hochpräzise Messung der Mikrostruktur der Oberfläche 23 der Bohrung 22 selbst dann möglich ist, wenn die Messsonde 25 und/oder die Oberfläche 23 der Bohrung 22 insbesondere im rauen Praxisbetrieb einer Werkstückproduktion Vibrationen ausgesetzt ist.

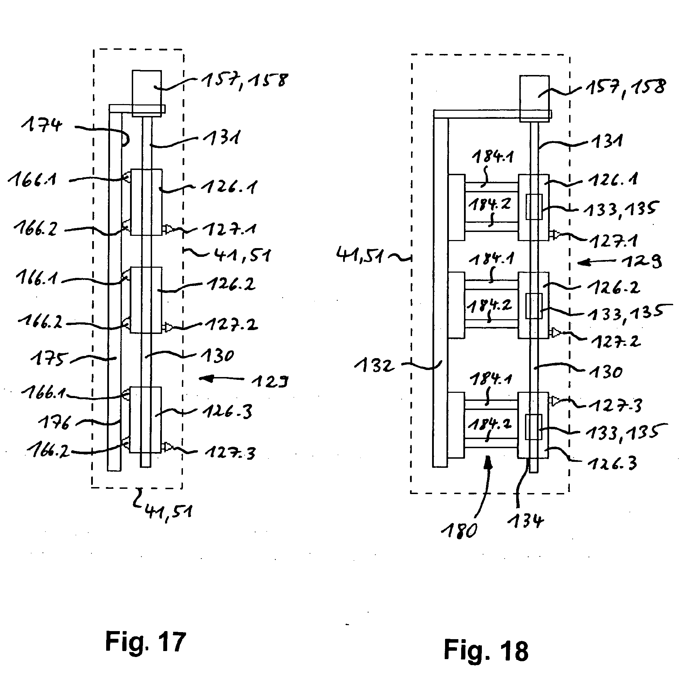

Wie in den Ausführungsbeispielen gemäß den Figuren 17 und 18 schematisch gezeigt, können alternativ oder zusätzlich zu den über den Umfang der Messsonde 25 beabstandet zueinander angeordneten taktilen Messtastern 26.1 bis 26.4 auch mehrere in Axial- bzw. Längsrichtung 36 der Messsonde 25 beabstandet zueinander angeordnete taktile Messtaster 126.1 bis 126.3 vorgesehen sein. In den gezeigten Ausführungsbeispielen sind mehrere der taktilen Messtaster 126.1 bis 126.3 mit einer gemeinsamen Vorschubeinrichtung 157 gekoppelt, mit deren Hilfe sie gemeinsam in Axial- bzw. Längsrichtung 36 der Messsonde 25 bzw. der Bohrung 22 bewegbar sind bzw. bewegt werden. Es versteht sich, dass auch die in den Figuren 1 bis 13 gezeigte Messsonde 25 alternativ oder auch zusätzlich mit mehreren taktilen Messtastern 126.1 bis 126.3 ausgestattet sein kann, welche in Axial- bzw. Längsrichtung 36 der Messsonde 25 beabstandet zueinander angeordnet sind und/oder mit mehreren taktilen Messtastern 126.1 bis 126.3 versehen sein kann, die mit einer gemeinsamen Vorschubeinrichtung 157, beispielsweise einem Verfahrschlitten, gekoppelt sind, mit deren bzw. dessen Hilfe sie gemeinsam in Axial- bzw. Längsrichtung 36 der Messsonde 25 bzw. der Bohrung 22 bewegbar sind bzw. bewegt werden. Bei der Vorschubeinrichtung 157 handelt es sich zweckmäßigerweise um einen Motor 158, jedoch können auch mehrere Motoren vorgesehen sein.

Wie ersichtlich, können die taktilen Messtaster 126.1 bis 126.3 an einem gemeinsamen, sich in Längsrichtung bzw. Axialrichtung 36 der Messsonde 25 erstreckenden Tragkörper 129 befestigt und vorzugsweise von diesem getragen sein. Bei diesem Tragkörper 129 kann es sich um eine Arbeitsspindel 130 und/oder um einen der Messfühlerträger 41 und/oder um einen der Fixierkörper 51 und/oder um einen Messtasterträger 132 handeln.

Bei den in den Figuren 17 und 18 gezeigten Ausführungsbeispielen kann der jeweils mit einer Arbeitsspindel 130 ausgebildete Tragkörper 129 mit Hilfe einer gemeinsamen Vorschubeinrichtung 127 (Motor 128) in Axial- bzw. Längsrichtung 36 der Messsonde 25 bewegt werden. An der mit einem Außengewinde 131 versehenen Arbeitsspindel 130 sind die taktilen Messtaster 126.1 bis 126.3 jeweils über einen mit einem passenden Innengewinde 134 versehenen Körper 133, vorzugsweise in Form einer Mutter 135, gelagert. Auf diese Weise kann mittels der gemeinsamen Vorschubeinrichtung 127 bzw. mit Hilfe des Motors 128 die jeweilige Arbeitsspindel 130 um ihre Längsachse gedreht werden, wodurch ein gemeinsamer Vorschub der taktilen Messtaster 126.1 bis 126.3 bzw. deren Vorschubkörper in eine der jeweiligen Gewindesteigung bzw. Drehrichtung entsprechenden Richtung erreicht werden. Auf diese Weise kann über mehrere, in Längsrichtung bzw. Axialrichtung der Bohrung 22 beabstandete Messfelder mit Hilfe der taktilen Messtaster 126.1 bis 126.3 das Mikrostrukturoberflächenprofil der Oberfläche 23 der Bohrung 23 synchron, d. h. gleichzeitig mit Hilfe der Tastspitzen 127.1, 127.2, 127.3 der in Längsrichtung bzw. Axialrichtung 36 beabstandet angeordneten taktilen Messtastern 126.1 bis 126.3 erfasst werden.

Bei dem in Figur 17 schematisch gezeigten Ausführungsbeispiel ist den in Längs- bzw. Axialrichtung 36 der Messsonde 25 jeweils beabstandet zueinander angeordneten Messtastern 126.1 bis 126.3 ein gemeinsamer Referenzkörper 175 zugeordnet. Dieser erstreckt sich in Axial- bzw. Längsrichtung 36 der Messsonde 25 und weist eine gemeinsame Referenzebene 174 für alle der diesem Referenzkörper 175 zugeordneten taktilen Messtastern 126.1 bis 126.3 auf. Jeder der taktilen Messtaster 126.1 bis 126.3 bzw. jeder deren Vorschubkörper stützt sich hier über zwei in einem Längsabstand zueinander angeordnete Anlageelemente 166.1 und 166.2, die hier jeweils mit Gleitkufen gestaltet sind, auf der gemeinsamen Referenzebene 174 des gemeinsamen Referenzkörpers 175 ab. Auf diese Weise kann mit Hilfe jedes der taktilen Messtaster 126.1 bis 126.3 die Mikrostruktur, insbesondere die Rauheit der Oberfläche 23 der Bohrung 22 einfach, schnell und kostengünstig erfasst werden. In den in den Figuren 17 und 18 gezeigten Ausführungsbeispielen, wo die hinsichtlich ihrer Mikrostruktur zu vermessende Oberfläche 23 der Bohrung 22 eine gerade Längskontur 33 aufweist, weist dementsprechend auch die Referenzebene 174 der Referenzkörper 175 eine gerade Längskontur 176 auf, so dass während der Erfassung der Mikrostruktur der Oberfläche 23 der Bohrung 22 die Tastspitzen 127.1, 127.2, 127.3 bzw. die taktilen Messtaster 126.1, 126.2, 126.3 über keine größeren Abstände nachgeführt werden müssen. Vorteilhafterweise kann der Referenzkörper 175 fest mit der Vorschubeinrichtung 157 bzw. dem Motor 158 verbunden sein.

In dem in Figur 18 gezeigten alternativen Ausführungsbeispiel einer Anordnung von mehreren in Axial- bzw. Längsrichtung 36 der Messsonde 25 beabstandet zueinander angeordneten taktilen Messtastern 126.1 bis 126.3 sind diese taktilen Messtaster 126.1 bis 126.3 jeweils über ein Festkörpergelenk 180 mit einem sich in Axial- bzw. Längsrichtung 36 der Messsonde 25 erstreckenden Messtasterträger 132 fest verbunden. Dabei sind die Festkörpergelenke 180 jeweils derart gestaltet, dass die mit ihnen fest verbundenen taktilen Messtaster 126.1 bis 126.3 jeweils eine ebene Bewegung relativ zu dem hier gemeinsamen Messtasterträger 132 ausführen, wenn sie beispielsweise wie hier gezeigt, mit Hilfe eines als Arbeitsspindel 130 gestalteten gemeinsamen Tragkörpers 129 in Längs- bzw. Axialrichtung 36 der Bohrung 22 entlang der Längskontur 33 bzw. der Oberfläche 23 der Bohrung 22 mit ihren Tastspitzen 127.1 bis 127.3 entlang bewegt werden.

In dem in Figur 18 gezeigten Ausführungsbeispiel sind die Festkörpergelenke 180 jeweils mit zwei Blattfedern 184.1 und 184.2 ausgebildet. Diese sind einerends mit dem sich in Axial- bzw. Längsrichtung 36 der Messsonde 25 erstreckenden Messtasterträger 132 fest verbunden und sind andernends fest mit dem jeweiligen Messtaster 126.1 bis 126.3, respektive deren jeweiligen Vorschubkörpern fest verbunden.

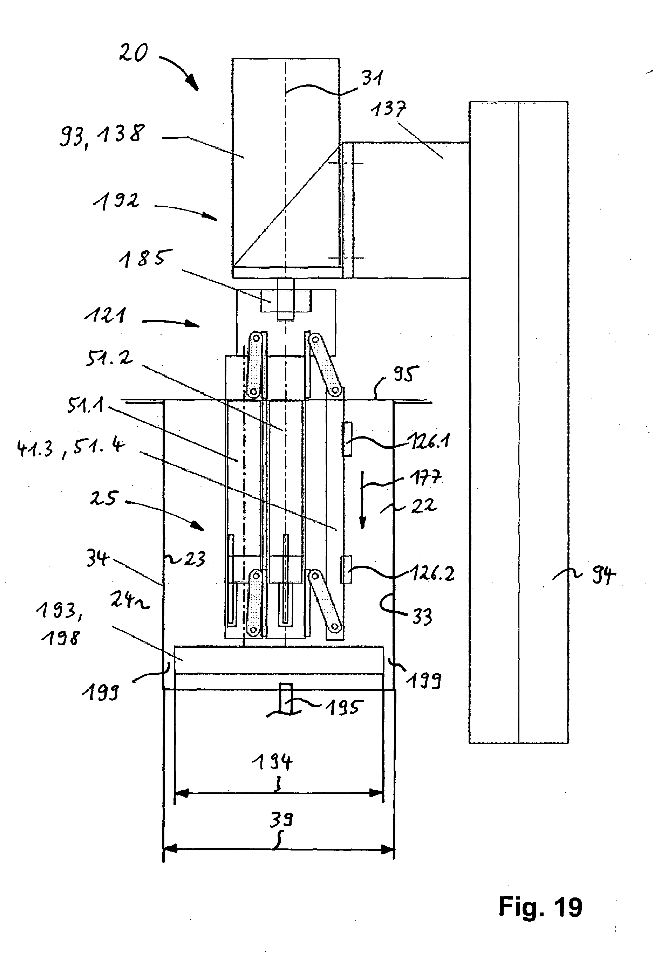

In den in den Figuren 17 bis 19 gezeigten Ausführungsbeispielen sind die in Axial- bzw. Längsrichtung 36 der Messsonde 25 beabstandet zueinander angeordneten taktilen Messtaster 126.1 bis 126.3 sowie die Vorschubeinrichtung 157 und der Tragkörper 129 zu einer gemeinsamen Einheit zusammengefasst. Im Falle des in Figur 17 gezeigten Ausführungsbeispiels wird diese Einheit noch ergänzt um den Referenzkörper 175 und im Falle des in Figur 18 gezeigten Ausführungsbeispiels wird die zuvor erwähnte Einheit ergänzt um die Festkörpergelenke 180 bzw. die Blattfedern 184.1 und 184.2 sowie den Messtasterträger 132. Diese Einheiten bzw. Baueinheiten können vorteilhafterweise ebenfalls an bzw. in bzw. von einem der in den Figuren 1 bis 16 gezeigten Messfühlerträger 41; 41.1, 41.1 und/oder Fixierkörper 51; 51.1 bis 51.4 aufgenommen sein. Ein derartiges Ausführungsbeispiel mit kombinierten taktilen Messtastern 26; 26.1 bis 26.4 und 126.1 bis 126.3 zeigt die Figur 19. Es versteht sich jedoch, dass die in Figur 19 im Unterschied zu den Figuren 1 bis 16 gezeigten Bauelemente auch einzeln oder in Kombination mit den in den Figuren 1 bis 16 gezeigten Bauelementen oder anstelle dieser Bauelemente, und umgekehrt, eingesetzt werden können. So ist beispielsweise in Figur 19 eine in die Bohrung 22 einführbare Messsonde 25 gezeigt, welche über eine Kupplung 185 fest, jedoch lösbar mit einem Messkopfteil 192 verbindbar ist bzw. verbunden ist. Der besagte Messkopfteil 192 kann eine Einrichtung 138, beispielsweise in Form eines Motors 93 oder mehrerer Motoren, zum Bewegen der Messsonde 25 in Axial- bzw. Längsrichtung 36 der Bohrung 22 und/oder in Umfangsrichtung der Bohrung 22 und/oder zum Drehen der Messsonde 25 um ihre Längsachse 31 aufweisen. Wenn die Messsonde 25 in einer vorgeschriebenen bzw. gewünschten Messposition innerhalb der Bohrung angeordnet und dort vorzugsweise mit Hilfe der Fixierkörper 51 fixiert ist, kann die Kupplung 185 gelöst werden. Auf diese Weise kann die Messsonde 25 während der Messung der Mikrostruktur der Oberfläche 23 der Bohrung 22 mit Hilfe der taktilen Messtaster 26; 126 von dem Messkopfteil 192 entkoppelt sein, so dass die Messsonde 25 dann in vorteilhafter Weise während der gesamten Messdauer von externen Vibrationen, wie sie in einer Fertigungsumgebung häufig auftreten, entkoppelt ist.

Am Beispiel der in Figur 19 gezeigten Ausführungsvariante einer erfindungsgemäßen Messvorrichtung 20 ist auch veranschaulicht, dass die Messsonde 25 an ihrem Einführende 38 einen vorzugsweise scheibenförmigen Absaughilfskörper 193 aufweisen kann, dessen Außendurchmesser 194 geringfügig kleiner ist als der Innendurchmesser 39 der Bohrung 22, so dass die Messsonde 25 mit dem Absaughilfskörper 193 in die Bohrung 22 unter Ausbildung eines ringförmigen Spaltes 199 zwischen dem Absaughilfskörper 193 und der Bohrungswand 34 der Bohrung 22 einführbar ist. Es versteht sich, dass der hier als Kreisscheibe 198 gestaltete Absaughilfskörper 193 auch als eine bzw. mit einer Reinigungsvorrichtung 97 gestaltbar ist, wie sie beispielsweise in den Figuren 1 bis 5 gezeigt und in den zugehörigen Beschreibungsteilen beschrieben ist.

Wie in Figur 19 schematisch angedeutet, kann im Bereich desjenigen Bohrungsendes der Bohrung 22, welcher der in die Bohrung 22 eingeführten Messsonde 25 gegenüber liegt, eine Vakuum- bzw. Absaugvorrichtung 195 vorgesehen sein, mit deren Hilfe Luft und/oder Gas durch den ringförmigen Spalt 199 zwischen dem Absaughilfskörper 193 und der Bohrungswand 34 der Bohrung 22 absaugbar ist, um eine Reinigung der Oberfläche 23 der Bohrung 22 bewirken zu können bzw. zu bewirken. Um eine Verschmutzung der Messfühler bzw. der taktilen Messtaster 26, 126 insbesondere mit Ölnebeln zu vermeiden, wird die Absaugvorrichtung 195 vorzugsweise derart angeordnet, dass mit ihrer Hilfe die Luft und/oder das Gas in Einführrichtung 177 der Messsonde 25 von dieser weg abgesaugt wird bzw. absaugbar ist.

Wie beispielsweise in Figur 11 gezeigt, kann die Messsonde 25 wenigstens einen ersten optischen Sensor 44 aufweisen, mit dem die Oberfläche 23 der Bohrung 22 mit einer niedrigen Auflösung erfassbar ist bzw. erfasst wird und kann wenigstens einen zweiten optischen Sensor 144 aufweisen, bei dem es sich vorzugsweise um eine Kamera 104 handelt, mit dem bzw. mit der die Oberfläche 23 der Bohrung 22 mit einer hohen bzw. höheren Auflösung erfassbar ist bzw. erfasst wird. Dabei kann vorteilhafterweise in einem ersten Schritt mit Hilfe des ersten optischen Sensors 44 die Oberfläche 23 der Bohrung 22 über einen Großteil ihres Umfanges, vorzugsweise über ihren gesamten Umfang, also über wenigstens 360 Grad, in einer relativ niedrigen Auflösung von beispielsweise 300 dpi erfasst werden und in einem zweiten Schritt kann mit Hilfe des zweiten optischen Sensors 144, bzw. der Kamera 104, an einer Stelle oder an mehreren Stellen der Bohrung 22 deren lokale Oberfläche 23 in einer hohen bzw. höheren Auflösung von beispielsweise 4.800 dpi erfasst werden.

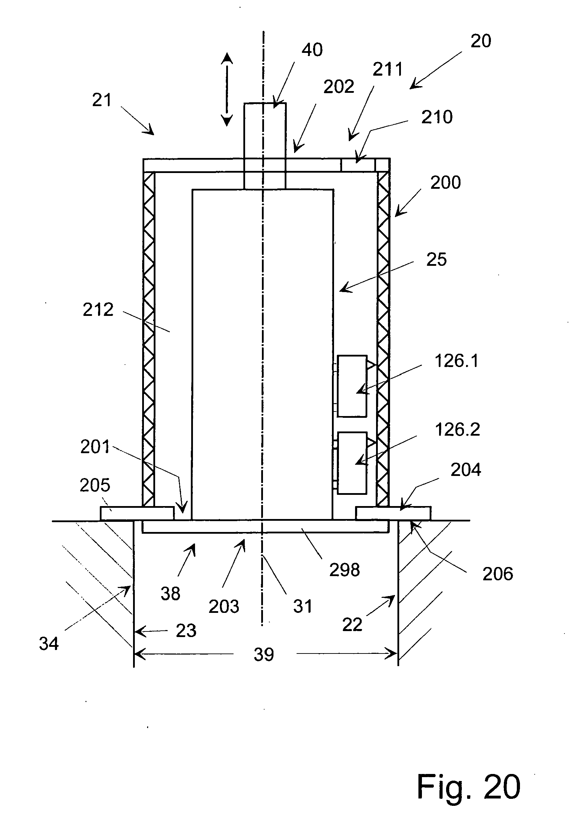

In dem in Figur 20 gezeigten Ausführungsbeispiel einer erfindungsgemäßen Messvorrichtung 20 ist diese mit einer als Schutzhülle gestalteten Schutzvorrichtung 200 ausgestattet. Diese schützt die empfindlichen taktilen Messtaster, von denen hier zwei Messtaster 126.1 und 126.2 gezeigt sind, gegen eine Kontamination mit Verunreinigungen, insbesondere Staub, der in der Umgebungs- bzw. Außenluft vorhanden sein kann bzw. vorhanden ist.

Die Schutzvorrichtung ist vorzugsweise an einem Messkopfteil befestigt, bei dem es sich um den in den Figuren 1 bis 5, 10, 11 und 19 gezeigten und vorstehend beschriebenen Messkopfteil 92 oder 192 handeln kann. Die Schutzvorrichtung 200 kann aber auch an einer Halterung für den Messkopf 20, beispielsweise an der in Figur 19 gezeigten und vorstehend beschriebenen Messkopfhalterung 137 befestigt sein. Die Schutzvorrichtung 200 ist hauben- bzw. glockenförmig gestaltet und umgreift die in die Bohrung 22 einführbare Messsonde 25 auch im Bereich der taktilen Messtaster 126.1, 126.2 vollumfänglich mit Bezug auf die Längsachse 31 der Messsonde 25. Die Schutzvorrichtung 200 weist eine zum Einführende 38 der Messsonde 25 hin offene erste Öffnung 201 auf und weist im Bereich ihres anderen Endes eine zweite Öffnung 202 auf, durch die ein bzw. der Tragkörper 40 für die taktilen Messtaster 126.1, 126.2 hier abgedichtet hindurch tritt. Ferner weist die Schutzvorrichtung 200 eine mit einem Luftfilter 210, insbesondere mit einem Staubfilter, versehene Durchgangsöffnung 211 auf, durch welche Luft in den Schutzraum 212 geleitet werden kann.

Die Messsonde 25 weist im Bereich ihres Einführendes 38 einen, vorzugsweise plattenförmigen, insbesondere als eine Kreisscheibe 298 gestalteten, Abschlusskörper 203 auf. Die Kreisscheibe 298 des Abschlusskörpers 203 kann auch so wie in den Figuren 1 bis 5 und/oder in Figur 19 gezeigt und vorstehend beschrieben ausgebildet sein, kann also auch zur Verwirklichung der im Zusammenhang mit den in den Figuren 1 bis 5 und 19 gezeigten Kreisscheiben 98, 198 stehenden Funktionen dienen.

Der Abschlusskörper 203 liegt in der in Figur 20 gezeigten Stellung der Messsonde 25 abdichtend an einer hier separaten Ringdichtung 204 an, die vorzugsweise an der Schutzvorrichtung 200 befestigt ist und die zu der Schutzvorrichtung 200 hin abgedichtet ist, so dass sich die taktilen Messtaster 126.2, 126.2 in dieser Stellung in einem von der Schutzvorrichtung 200, dem Abschlusskörper 203 und der Ringdichtung 200 begrenzten Schutzraum 212 befinden. Die Ringdichtung 200 weist einen Außendurchmesser 205 auf, der größer ist als der Innendurchmesser 39 der Bohrung 22 und liegt auf einem Bohrungsrand 206 der Bohrung 22 vollumfänglich abdichtend an. Mit anderen Worten sind die taktilen Messtaster 126.1, 126.2 bzw. ist die Messsonde 25 zumindest im Ruhezustand bzw. in Ruhestellung gegenüber der etwaig, insbesondere mit Staub kontaminierten Außenluft geschützt, die hier über ein als Staubfilter gestaltetes Luftfilter 210 gefiltert in den Schutzraum 212 und gegebenenfalls, nach einer Überführung der taktilen Messtaster in die Bohrung, auch in den Messraum gelangen kann.

Die Schutzvorrichtung 200 ist vorzugsweise mit elastischen und/oder mit relativ zueinander bewegbaren Teilen ausgebildet, so dass sie in Längsrichtung 36 der Messsonde 25 insbesondere stauchbar und/oder zusammendrückbar und/oder zusammenschiebbar und wieder streckbar und/oder wieder auseinanderziehbar und/oder wieder auseinanderschiebbar ist und umgekehrt. Bevorzugt ist die Schutzvorrichtung 200 nach Art eines Faltenbalges, beispielsweise aus gefaltetem Kunststoff, oder mit einem Faltenbalg gestaltet und/oder rohrförmig, insbesondere mit oder aus relativ zueinander teleskopartig verschiebbaren, vorzugsweise mit Rohrsegmenten oder als Rohrsegmente ausgebildeten Teilen gestaltet.

Wenn also die Messsonde 25 zusammen mit ihren taktilen Messtastern 126.1, 126.2 ausgehend von einer Ruhestellung 207, in welcher sich die taktilen Messtaster 126.1, 126.2 nicht in der Bohrung 22 befinden, in die Bohrung 22 eingeführt wird, wird die Schutzvorrichtung 200 in eine in Figur 20 nicht gezeigte Freigebestellung überführt. In dieser Freigabestellung können die taktilen Messtaster 126.1, 126.2 noch immer von der Schutzvorrichtung 200 gegen einen Zutritt von kontaminierter Außenluft geschützt sein, sind jedoch in Richtung nach außen bzw. in Richtung zu der Bohrungswand 34 bzw. der Oberfläche 23 der Bohrung 22 hin nicht mehr von der Schutzvorrichtung 200 seitlich abgedeckt, so dass dann die Mikrostruktur der Oberfläche 23 der Bohrung 22 mit Hilfe der taktilen Messtaster 126.1, 126.2 erfasst werden kann.

### BEZUGSZEICHENLISTE

- 20: Messvorrichtung
- 21: Messkopf
- 22: Bohrung
- 23: Oberfläche von 22
- 24: Werkstück
- 25: Messsonde
- 26: Messtaster
- 26.1: bis
- 26.4: Messtaster
- 27: Tastspitze
- 27.1: bis
- 27.4: Tastspitze
- 28: Motorzylinder
- 29: Vorschubkörper
- 30.1: Umfangswinkel
- 31: Längsachse
- 32: Pendelkufentaster
- 33: Längskontur von 22
- 34: Bohrungswand
- 35: Vorschubeinrichtung
- 36: Längsrichtung von 25
- 37: Mittel zur Unterdrükkung von Vibrationen
- 38: Einführende von 25
- 39: Innendurchmesser
- 40: Tragkörper
- 41: Messfühlerträger
- 41.1: Messfühlerträger
- 41.2: Messfühlerträger
- 41.3: Messfühlerträger
- 42: Messfühler

- 44: Optischer Sensor
- 45: Mechanismus
- 45.1: Mechanismus
- 45.2: Mechanismus
- 46: Einführ- und Entnahmestellung
- 46.1: Einführ- und Entnahmestellung
- 46.2: Einführ- und Entnahmestellung
- 47: Messstellung
- 47.1: Messstellung
- 47.2: Messstellung
- 48: Tastnadel
- 49: Tastarm
- 51: Fixierkörper
- 51.1: bis
- 51.5: Fixierkörper
- 52: Abhebemechanismus
- 53: Längsrichtung von 40
- 54: Hebelarm von 57
- 55: Motor
- 56: Fixierstellung
- 57.1: Lenker
- 57.2: Lenker
- 58.1: bis
- 58.4: Lenker
- 59.1: bis
- 59.4: Hilfslenker
- 60.1: Erster Lenkerarm
- 60.2: Zweiter Lenkerarm
- 61.1: Abstands- und Stützelement
- 61.2: Abstands- und Abstützelement
- 62: Abstand
- 63.1: Rolle
- 63.2: Rolle
- 64.1: Drehachse von 63.1
- 64.2: Drehachse von 63.2
- 65: Stützkörper
- 66.1: Anlageelement
- 66.2: Anlageelement
- 67: Ebene
- 68: Messbereich (Doppelpfeil)
- 69: Pendellager
- 70: Drehachse von 65
- 71: Gleitkufenarm
- 72: Gleitkufe
- 73: Feder (Blattfeder)
- 74: Referenzoberfläche
- 75: Referenzkörper
- 76: Blattfeder
- 77: Trägerteil
- 78: Trägerteil
- 80: Steuerelement
- 81: Mutter
- 82: Innengewinde von 81
- 83: Spindel
- 84: Außengewinde von 83
- 85.1: Doppellenker
- 85.2: Doppellenker
- 86.1: Lenkerarm

- 86.2: Lenkerarm
- 87: Querverbindungsstück
- 88.1: Steuernocken
- 88.2: Steuernocken
- 89: Steuerende
- 90: Feder
- 92: Messkopfteil
- 93: Motor
- 94: Gestell
- 95: Fixiereinrichtung
- 97: Reinigungsvorrichtung
- 98: Kreisscheibe
- 98.1: Kreisscheibenteil
- 98.2: Kreisscheibenteil
- 99: Ringschlitz
- 100: Abstandshalter
- 101: Außendurchmesser von 98
- 102: Feder
- 103: Drehachse von 49
- 104: Kamera
- 105: Zahnriemen
- 106: Lagerteil
- 107: Lager
- 108: Lageraufnahme
- 109: Drehachse
- 110: Drehachse
- 111: Drehachse
- 112: Drehachse
- 113: Drehachse
- 116: Drehachse
- 117: Drehachse
- 118: Schlitz
- 119: Längsachse von 22
- 120: Öffnung
- 121: Messkopf
- 126.1: Messtaster
- 126.2: Messtaster
- 126.3: Messtaster
- 127.1: Tastspitze
- 127.2: Tastspitze
- 127.3: Tastspitze
- 129: Tragkörper
- 130: Arbeitsspindel
- 131: Außengewinde von 130
- 132: Messtasterträger
- 133: Körper
- 134: Innengewinde von 133
- 135: Mutter
- 137: Messkopfhalterung
- 138: Einrichtung
- 144: zweiter optischer Sensor
- 157: Vorschubeinrichtung (Verfahrschlitten)
- 158: Motor
- 166.1: Anlageelement
- 166.2: Anlageelement
- 174: Referenzebene
- 175: Referenzkörper
- 176: Längskontur von 174
- 177: Einführrichtung
- 180: Festkörpergelenk
- 184.1: Blattfeder
- 184.2: Blattfeder
- 185: Kupplung

- 192: Messkopfteil
- 193: Absaughilfskörper
- 194: Außendurchmesser von 193
- 195: Absaugvorrichtung
- 198: Kreisscheibe
- 199: Spalt
- 200: Schutzvorrichtung
- 201: erste Öffnung von 200
- 202: zweite Öffnung von 200
- 203: Abschlusskörper
- 204: Ringdichtung
- 205: Außendurchmesser von 205
- 206: Bohrungsrand von 22
- 207: Stellung
- 208: Schutzstellung
- 210: Luftfilter (Staubfilter)
- 211: Durchgangsöffnung
- 212: Schutzraum
- 298: Kreisscheibe

## Patentansprüche

1. Verfahren zum Messen der Mikrostruktur, insbesondere der Rauheit von Oberflächen (23) von zylindrischen Bohrungen (22) von Werkstücken (24), beispielsweise von Motorzylindern (28), mithilfe einer einen Messkopf (21) aufweisenden Messvorrichtung (20), die eine in die Bohrung (22) einführbare Messsonde (25) mit einem taktilen Messtaster (26; 26.1, 26.2, 26.3, 26.4; 126.1, 126.2, 126.3) umfasst, der eine Tastspitze (27; 27.1, 27.2, 27.3, 27.4; 127.1, 127.2, 127.3) zur Erfassung der Mikrostruktur der Oberfläche (23) der Bohrung (22) aufweist,
**dadurch gekennzeichnet,**
**dass** die Mikrostruktur der Oberfläche (23) der Bohrung (22) mithilfe mehrerer Tastspitzen (27; 27.1, 27.2, 27.3, 27.4; 127.1, 127.2, 127.3) von mehreren taktilen Messtastern (26; 26.1, 26.2, 26.3, 26.4; 126.1, 126.2, 126.3) der diese Messtaster (26; 26.1, 26.2, 26.3, 26.4; 126.1, 126.2, 126.3) enthaltenden Messsonde (25) insbesondere im Takt einer Produktionslinie vorzugsweise simultan von mehreren der taktilen Messtastern (26; 26.1, 26.2, 26.3, 26.4; 126.1, 126.2, 126.3) erfasst wird.

2. Messvorrichtung zur Durchführung des Verfahrens nach Anspruch 1, mit einem Messkopf (21), der eine in die zylindrische Bohrung (22) eines Werkstückes (24), beispielsweise eines Motorzylinders (28) einführbare Messsonde (25) mit einem taktilen Messtaster (26; 26.1, 26.2, 26.3, 26.4; 126.1, 126.2, 126.3) aufweist, der eine Tastspitze (27; 27.1, 27.2, 27.3, 27.4; 127.1, 127.2, 127.3) zur Erfassung der Mikrostruktur, insbesondere der Rauheit der Oberfläche (23) der Bohrung (22) aufweist,
**dadurch gekennzeichnet,**
**dass** die Messsonde (25) mehrere taktile Messtaster (26; 26.1, 26.2, 26.3, 26.4; 126.1, 126.2, 126.3) aufweist, die jeweils eine Tastspitze (27; 27.1, 27.2, 27.3, 27.4; 127.1, 127.2, 127.3) zur Erfassung der Mikrostruktur der Oberfläche (23) der Bohrung (22) aufweisen.

3. Messvorrichtung nach Anspruch 2, **dadurch gekennzeichnet, dass** wenigstens zwei der taktilen Messtaster (26; 26.1, 26.2, 26.3, 26.4; 126.1, 126.2, 126.3) derart angeordnet und/oder gestaltet sind, dass mit diesen eine simultane Messung der Mikrostruktur der Oberfläche (23) der Bohrung (22) ermöglicht ist.

4. Messvorrichtung nach Anspruch 2 oder 3, **dadurch gekennzeichnet, dass** wenigstens zwei, vorzugsweise alle taktilen Messtaster (26; 26.1, 26.2, 26.3, 26.4) über den Umfang der Messsonde (25) und in vorzugsweise gleichen Umfangswinkeln (30.1, 30.2) um die Längsachse (31) der Messsonde (25) beabstandet zueinander angeordnet sind.

5. Messvorrichtung nach Anspruch 4, **dadurch gekennzeichnet, dass** die taktilen Messtaster (26; 26.1, 26.2, 26.3, 26.4) koaxial zu der Längsachse (31) der Messsonde (25) angeordnet sind.

6. Messvorrichtung nach einem der Ansprüche 2 bis 5, **dadurch gekennzeichnet, dass** die taktilen Messtaster (26; 26.1, 26.2, 26.3, 26.4; 126.1, 126.2, 126.3) zum Zwecke der Erfassung der Mikrostruktur der Oberfläche (23) der Bohrung (22) jeweils mittels einer Vorschubeinrichtung (35; 157) insbesondere in Längsrichtung (36) der Messsonde (25) vorzugsweise mittels eines Motors (158) bewegbar sind bzw. bewegt werden.

7. Messvorrichtung nach einem der Ansprüche 2 bis 6, **dadurch gekennzeichnet, dass** die Messsonde (25) ein Mittel (37) zur Unterdrückung von Vibrationen zwischen den taktilen Messtastern (26; 26.1, 26.2, 26.3, 26.4) und der zu messenden Oberfläche (23) der Bohrung (22) aufweist.

8. Messvorrichtung nach einem der Ansprüche 2 bis 7, **dadurch gekennzeichnet, dass** die Messsonde (25) einen vorzugsweise zentralen Tragkörper (40) aufweist, an dem wenigstens ein Messfühlerträger (41.1, 41.2; 41.3) befestigt ist, der wenigstens einen Messfühler (42) zur Messung von Kennwerten der Bohrung (22), insbesondere von Oberflächenkennwerten der Bohrung (22), vorzugsweise wenigstens einen der taktilen Messtaster (26; 26.1, 26.2, 26.3, 26.4; 126.1, 126.2, 126.3) zur Erfassung der Mikrostruktur der Oberfläche (23) der Bohrung (22) und/oder wenigstens einen optischen Sensor (44) zur Erfassung der Honstruktur und/oder von Poren und/oder von Kratzern der Oberfläche (23) der Bohrung (22) trägt, und der mithilfe eines Mechanismus (45; 45.1, 45.2) von seiner Einführ- und Entnahmestellung (46; 46.1, 46.2), in welcher die Messsonde (25) zusammen mit dem Messfühlerträger (41.1, 41.2, 41.3) und dem Messfühler (42) vorzugsweise berührungslos in die Bohrung (22) einführbar ist, in eine Messstellung (47; 47.1, 47.2) überführbar ist bzw. überführt wird, in welcher eine Messung der Kennwerte der Bohrung (22) mithilfe des Messfühlers (42) möglich ist bzw. erfolgt, und umgekehrt.

9. Messvorrichtung nach einem der Ansprüche 2 bis 8, **dadurch gekennzeichnet, dass** die Messsonde (25) einen vorzugsweise zentralen Tragkörper (40) aufweist, an dem wenigstens ein Fixierkörper (51; 51.1, 51.2, 51.3, 51.4) zur Fixierung der Messsonde (25) relativ zu der Bohrung (22) befestigt ist, der mithilfe eines Mechanismus (45; 45.1) von einer Einführ- und Entnahmestellung (46; 46.1), in welcher die Messsonde (25) zusammen mit dem Fixierkörper (51; 51.1, 51.2, 51.3, 51.4) vorzugsweise berührungslos in die Bohrung (22) einführbar und wieder aus der Bohrung (22) entnehmbar ist, in eine Fixierstellung (56) überführbar ist bzw. überführt wird, in welcher der Fixierkörper (51; 51.1, 51.2, 51.3, 51.4) an der Oberfläche (23) der Bohrung (22) unter Ausübung von Druckkräften auf die Oberfläche (23) der Bohrung (22) an dieser abgestützt ist, so dass die Messsonde (25) in der Fixierstellung (56) des Fixierkörpers (51; 51.1, 51.2, 51.3, 51.4) gegen Bewegungen relativ zu der Bohrung (22) fixiert ist, und umgekehrt.

10. Messvorrichtung nach Anspruch 8 oder 9, **dadurch gekennzeichnet, dass** der Messfühlerträger (41.1, 41.2, 41.3) und/oder der Fixierkörper (51; 51.1, 51.2, 51.3, 51.4) mittels wenigstens eines Lenkers (57.1, 57.2; 58.1, 58.2; 58.3, 58.4) an dem Tragkörper (40) angelenkt ist/sind, so dass der Messfühlerträger (41.1, 41.2, 41.3) und/oder der Fixierkörper (51; 51.1, 51.2, 51.3, 51.4) relativ zu dem Tragkörper (40) von seiner Einführ- und Entnahmestellung (46; 46.1, 46.2) in seine Messstellung (47; 47.1, 47.2) und/oder seine Fixierstellung (56) spreizbar ist bzw. gespreizt wird.

11. Messvorrichtung nach einem der Ansprüche 8 bis 10, **dadurch gekennzeichnet, dass** wenigstens zwei der Messfühlerträger (41.1, 41.2, 41.3) und/oder zwei der Fixierkörper (51; 51.1, 51.2, 51.3, 51.4) an dem zentralen Tragkörper (40) der Messsonde (25) befestigt und über den Umfang des Tragkörpers (40) in Umfangswinkeln (30.1, 30.2) um dessen Längsachse (31) zumindest in Ihrer jeweiligen Messstellung (47; 47.1, 47.2) bzw. Fixierstellung (56) beabstandet zueinander angeordnet sind.

12. Messvorrichtung nach einem der Ansprüche 8 bis 11, **dadurch gekennzeichnet, dass** wenigstens zwei der Messfühlerträger (41.1, 41.2, 41.3) derart gekoppelt sind, dass sie gemeinsam von ihrer jeweiligen Einführ- und Entnahmestellung (46.1) in ihre jeweilige Messstellung (47.1) überführbar sind bzw. überführt werden, und umgekehrt.

13. Messvorrichtung nach einem der Ansprüche 8 bis 12, **dadurch gekennzeichnet, dass** wenigstens zwei der Fixierkörper (51; 51.1, 51.2, 51.3, 51.4) derart gekoppelt sind, dass sie gemeinsam von ihrer jeweiligen Einführ- und Entnahmestellung (46; 46.1, 46.2) in ihre jeweilige Fixierstellung (56) überführbar sind bzw. überführt werden, und umgekehrt.

14. Messvorrichtung nach einem der Ansprüche 8 bis 11, **dadurch gekennzeichnet, dass** wenigstens einer der Messfühlerträger (41.1, 41.2, 41.3) und wenigstens einer der Fixierkörper (51) derart gekoppelt sind, dass sie gemeinsam von ihrer jeweiligen Einführ- und Entnahmestellung (46.1, 46.2) in ihre jeweilige Messstellung (47.1, 47.2) bzw. Fixierstellung (56) überführbar sind bzw. überführt werden, und umgekehrt.

15. Messvorrichtung nach einem der Ansprüche 8 bis 14, **dadurch gekennzeichnet, dass** der Messfühlerträger (41.1, 41.2, 41.3) und/oder der Fixierkörper (51; 51.1, 51.2, 51.3, 51.4) mittels eines Motors (55) von seiner bzw. ihrer Einführ- und Entnahmestellung (46.1, 46.2) in seine bzw. ihre Messstellung (47.1, 47.2) und/oder Fixierstellung (56) bewegbar sind bzw. bewegt werden.

16. Messvorrichtung nach einem der Ansprüche 8 bis 15, **dadurch gekennzeichnet, dass** wenigstens einer der Messfühler (42), insbesondere wenigstens einer der taktilen Messtaster (26; 26.1, 26.2, 26.3, 26.4; 126.1, 126.2, 126.3) von dem Fixierkörper (51; 51.1, 51.2, 51.3, 51.4) getragen ist, so dass der Messfühler (42) bei einer Bewegung des Fixierkörpers (51; 51.1, 51.2, 51.3, 51.4) von seiner Einführ- und Entnahmestellung (46.1) in seine Fixierstellung (56), und umgekehrt, gemeinsam mit dem Fixierkörper (51; 51.1, 51.2, 51.3, 51.4) bewegt wird.

17. Messvorrichtung nach einem der Ansprüche 8 bis 16, **dadurch gekennzeichnet, dass** wenigstens zwei der Messfühler (42), insbesondere zwei der taktilen Messtaster (26; 26.1, 26.2, 26.3, 26.4; 126.1, 126.2, 126.3) jeweils von einem der Fixierkörper (51; 51.1, 51.2, 51.3, 51.4) getragen sind, die über den Umfang des Tragkörpers (40) in Umfangsrichtung um dessen Längsachse (31) zumindest in ihrer jeweiligen Fixierstellung (56) beabstandet zueinander angeordnet sind, so dass der jeweilige Messfühler (42) bei einer Bewegung des zugehörigen Fixierkörpers (51; 51.1, 51.2, 51.3, 51.4) von seiner Einführ- und Entnahmestellung (46.1) in seine Fixierstellung (56), und umgekehrt, gemeinsam mit dem jeweiligen Fixierkörper (51; 51.1, 51.2, 51.3, 51.4) bewegt wird.

18. Messvorrichtung nach einem der Ansprüche 8 bis 17, **dadurch gekennzeichnet, dass** die Vorschubeinrichtung (35; 157) für die taktilen Messtaster (26; 26.1, 26.2, 26.3, 26.4) und gegebenenfalls deren Motor (158) von dem Fixierkörper (51; 51.1, 51.2, 51.3, 51.4) getragen, vorzugsweise an oder in einem Vorschubkörper (29) des Fixierkörpers (51; 51.1, 51.2, 51.3, 51.4) aufgenommen ist bzw. sind.

19. Messvorrichtung nach einem der Ansprüche 8 bis 18, **dadurch gekennzeichnet, dass** der Messfühlerträger (41.2) mit wenigstens einem Abstands- und Stützelement (61.1, 61.2) zur Abstützung des Messfühlers (42) in seiner Messstellung (47.2) an der Oberfläche (23) der Bohrung (22) in einem vorbestimmten Abstand (62) zu der Oberfläche (23) der Bohrung (22) versehen ist.

20. Messvorrichtung nach Anspruch 19, **dadurch gekennzeichnet, dass** das Abstands- und Stützelement (61.1, 61.2) als eine Rolle (63.1, 63.2) oder Kugel gestaltet ist, die in der Messstellung (47.2) des Messfühlerträgers (41.2) um eine parallel zu der Oberfläche (23) der Bohrung (22) verlaufende Drehachse (64.1, 64.2)drehbar ist, so dass in dieser Messstellung (47.2) der Messfühlerträger (41.2) zusammen mit dem Messfühler (42) in einem vorbestimmten Abstand (62) zu der Oberfläche (23) der Bohrung (22) um die Längsachse (119) der Bohrung (22) drehbar ist.

21. Messvorrichtung nach einem der Ansprüche 9 bis 20, **dadurch gekennzeichnet, dass** der Fixierkörper (51; 51.1, 51.2, 51.3, 51.4) einen im Bereich der Tastspitze (27.1, 27.2, 27.3, 27.4) der taktilen Messtaster (26.1, 26.2, 26.3, 26.4) angeordneten Stützkörper (65) aufweist, über den sich der Fixierkörper (51.1, 51.2, 51.3, 51.4) in seiner Fixierstellung (56) auf der Oberfläche (23) der Bohrung (22) abstützt.

22. Messvorrichtung nach Anspruch 21, **dadurch gekennzeichnet, dass** der Stützkörper (65) wenigstens zwei in einem Abstand angeordnete Anlageelemente (66.1, 66.2) aufweist, die vorzugsweise starr miteinander verbunden sind und die in der Fixierstellung (56) des Fixierkörpers (51.1, 51.2, 51.3, 51.4) an der Oberfläche (23) der Bohrung (22) anliegen.

23. Messvorrichtung nach Anspruch 22, **dadurch gekennzeichnet, dass** die Anlageelemente (66.1, 66.2) in der Fixierstellung (56) des Fixierkörpers (51.1, 51.2, 51.3, 51.4) in einer gemeinsamen Ebene (67) angeordnet sind, die parallel zu der Längsachse (119) der Bohrung ausgebildet ist und die vorzugsweise die Längsachse (119) der Bohrung (22) enthält.

24. Messvorrichtung nach einem der Ansprüche 22 oder 23, **dadurch gekennzeichnet, dass** die Tastspitze (27.1, 27.2, 27.3, 27.4) des taktilen Messtasters (26.1, 26.2, 26.3, 26.4) in der Fixierstellung (56) des Fixierkörpers (51.1, 51.2, 51.3, 51.4) zwischen zwei der an der Oberfläche (23) der Bohrung (22) anliegenden Anlageelementen (66.1, 66.2) angeordnet ist und während der Mikrostrukturmessung in einem Messbereich (68) zwischen den zwei Anlageelementen (66.1, 66.2) an der Oberfläche (23) der Bohrung (22) anliegend entlang bewegt wird.

25. Messvorrichtung nach einem der Ansprüche 18 bis 24, **dadurch gekennzeichnet, dass** der Stützkörper (65) über ein Dreh- oder Pendellager (69) an dem die Vorschubeinrichtung (35) für den taktilen Messtaster (26.1, 26.2, 26.3, 26.4) enthaltenden Vorschubkörper (29) angelenkt und von diesem getragen ist.

26. Messvorrichtung nach Anspruch 25, **dadurch gekennzeichnet, dass** der Stützkörper (65) um eine Drehachse (70) relativ zu dem Vorschubkörper (29) drehbar angeordnet ist, die in der Fixierstellung (56) des Fixierkörpers (51.1, 51.2, 51.3, 51.4) etwa senkrecht zu der Längsachse (119) der Bohrung (22) angeordnet ist.

27. Messvorrichtung nach einem der Ansprüche 18 bis 26, **dadurch gekennzeichnet, dass** der Stützkörper (65) lösbar mit dem Vorschubkörper (29) verbunden ist.

28. Messvorrichtung nach einem der Ansprüche 18 bis 27, **dadurch gekennzeichnet, dass** der Vorschubkörper (29) mit einem sich in Richtung der Tastspitze (27.1, 27.2, 27.3, 27.4) des taktilen Messtasters (26.1, 26.2, 26.3, 26.4) erstreckenden Gleitkufenarm (71) verbunden ist, der im Bereich der Tastspitze (27.1, 27.2, 27.3, 27.4) des taktilen Messtasters (26.1, 26.2, 26.3, 26.4) mit einer Gleitkufe (72) versehen ist, die durch die Federkraft einer Feder (73) auf eine Referenzoberfläche (74) eines Referenzkörpers (75) des Stützkörpers (65) angedrückt ist, wobei die Gleitkufe (72) während der Mikrostrukturmessung simultan zu einer Bewegung der Tastspitze (27.1, 27.2, 27.3, 27.4) entlang der Oberfläche (23) der Bohrung (22) entlang der Referenzoberfläche (74) des Referenzkörpers (75) des Stützkörpers (65) bewegt wird.

29. Messvorrichtung nach Anspruch 28, **dadurch gekennzeichnet, dass** der Gleitkufenarm (71) mittels einer vorzugsweise als Blattfeder gestalteten Feder (73) an dem Vorschubkörper (29) befestigt ist.

30. Messvorrichtung nach einem der Ansprüche 10 bis 29, **dadurch gekennzeichnet, dass** der Lenker (57.1, 57.2; 58.1, 58.2; 58.3, 58.4) mittels eines in Längsrichtung (36) der Messsonde (25) bewegbaren Steuerelements (80) um seine fest mit dem Tragkörper (40) verbundene Drehachse (109, 111) drehbar ist, so dass bei einer Bewegung des Steuerelements (80) in Längsrichtung (36) der Messsonde (25) der Messfühlerträger (41.1, 41.2, 41.3) und/oder der Fixierkörper (51.1) bis (51.4) von seiner bzw. ihrer Einführ- und Entnahmestellung (46.1, 46.2) in seine bzw. ihre Messstellung (47.1, 47.2) und/oder Fixierstellung (56) bewegbar sind bzw. bewegt werden.

31. Messvorrichtung nach Anspruch 30, **dadurch gekennzeichnet, dass** es sich bei dem Steuerelement (80) um eine mit einem Innengewinde (82) versehene Mutter (81) handelt, die an dem Tragkörper (40) in Längsrichtung (36) der Messsonde (25) axial verschiebbar geführt, jedoch gegen eine Drehung um die Längsachse (31) des Tragkörpers (40) bzw. der Messsonde (25) gesichert ist und die auf einer ein passendes Außengewinde (84) aufweisenden Spindel (38) aufgenommen ist, die vorzugsweise mittels eines Motors (55) um Ihre Längsachse (31) drehbar ist, so dass eine Drehung der Spindel (83) um ihre Längsachse (31) zu einer Verschiebung der Mutter (81) längs der Spindel (83) führt.

32. Messvorrichtung nach einem der Ansprüche 10 bis 31, **dadurch gekennzeichnet, dass** der Lenker (57.1, 57.2) als Doppellenker (85.1, 85.2) mit zwei Lenkerarmen (86.1, 86.2) gestaltet ist, die auf voneinander wegweisenden Seiten des jeweiligen Fixierkörpers (52.1, 52.2, 52.3, 52.4) angelenkt sind.

33. Messvorrichtung nach Anspruch 32, **dadurch gekennzeichnet, dass** die Lenkerarme (86.1, 86.2) starr miteinander verbunden sind.

34. Messvorrichtung nach Anspruch 32 oder 33, **dadurch gekennzeichnet, dass** der Doppellenker (85.1, 85.2) stimmgabelförmig gestaltet ist.

35. Messvorrichtung nach einem der Ansprüche 32 bis 34, **dadurch gekennzeichnet, dass** die beiden Lenkerarme (86.1, 86.2) des Doppellenkers (85.1, 85.2) über ein Querverbindungsstück (87) starr miteinander verbunden sind und sich von diesem ausgehend in eine Richtung etwa parallel zueinander erstrecken.

36. Messvorrichtung nach einem der Ansprüche 10 bis 35, **dadurch gekennzeichnet, dass** der Lenker (58.1, 58.2; 58.3, 58.4) um eine Drehachse (111) drehbar an dem Tragkörper (40) angelenkt ist und mit sich beiderseits dieser Drehachse (111) in unterschiedliche, vorzugsweise entgegengesetzte Richtungen erstreckenden Lenkerarmen (60.1, 60.2) gestaltet ist, wobei ein erster Lenkerarm (60.1) des Lenkers (58.1, 58.2, 58.3, 58.4) um eine in einem Abstand zu seiner Drehachse (111) angeordnete Drehachse (112) drehbar an dem Tragkörper (40) angelenkt ist, die relativ zu dem Tragkörper (40) in dessen Längsrichtung (53) verschieblich an dem Tragkörper (40) geführt ist, und wobei ein zweiter Lenkerarm (60.2) des Lenkers (58.1, 58.2, 58.3, 58.4) um eine in einem Abstand zu seiner Drehachse (111) angeordnete Drehachse (113) an dem Fixierkörper (51) und/oder an dem Messfühlerträger (41.1, 41.2) angelenkt ist, und wobei ein Hilfslenker (59.1, 59.2, 59.3, 59.4) um eine Drehachse (116) drehbar an dem Tragkörper (40) angelenkt ist und um die Drehachse (111) des Lenkers (58.1, 58.2, 58.3, 58.4) drehbar an dem Lenker (58.1, 58.2, 58.3, 58.4) angelenkt ist.

37. Messvorrichtung nach einem der Ansprüche 8 bis 36, **dadurch gekennzeichnet, dass** der Fixierkörper (51) unabhängig von dem Messfühlerträger (41.2) von seiner Einführ- und Entnahmestellung (46.1) in seine Fixierstellung (56) bewegbar ist bzw. bewegt wird.

38. Messvorrichtung nach einem der Ansprüche 8 bis 37, **dadurch gekennzeichnet, dass** der Messfühlerträger (41.2) unabhängig von dem Fixierkörper (51) von seiner Einführ- und Entnahmestellung (46.2) in seine Messstellung (47.2) bewegbar ist bzw. bewegt wird.

39. Messvorrichtung nach einem der Ansprüche 10 bis 39, **dadurch gekennzeichnet, dass** der Lenker oder die Lenker (57.1, 57.2; 58.1, 58.2) des Fixierkörpers (51) und der Lenker oder die Lenker (58.3, 58.4) des Messfühlerträgers (41.2) von einem gemeinsamen, in Längsrichtung (36) der Messsonde (25) bewegbaren Steuerelement (80) um seine bzw. ihre fest mit dem Tragkörper (40) verbundene Drehachse bzw. verbundenen Drehachsen (109, 111) bewegbar ist/sind bzw. wird/werden, wobei bei einer Bewegung des Steuerelements (80) in Längsrichtung (36) der Messsonde (25) entweder der Fixierkörper (51) oder der Messfühlerträger (41.2) von seiner Einführ- und Entnahmestellung (46.1, 46.2) in seine Fixierstellung (56) bzw. Messstellung (47.1, 47.2) bewegt wird.

40. Messvorrichtung nach einem der Ansprüche 8 bis 39, **dadurch gekennzeichnet, dass** der Messfühlerträger (41.1, 41.2, 41.3) und/oder der Fixierkörper (51.1, 51.2, 51.3, 51.4) mithilfe der Federkraft einer Feder (90, 91) von seiner/ihrer Messstellung (47.1, 47.2) und/oder Fixierstellung (56) in seine/ihre Einführ- und Entnahmestellung (46.2, 46.2) bewegbar ist bzw. wird.

41. Messvorrichtung nach einem der Ansprüche 2 bis 40, **dadurch gekennzeichnet, dass** die Messsonde (25) relativ zu einem fest mit ihr verbundenen Messkopfteil (92; 192) mittels eines Motors (93) um Ihre Längsachse (31) drehbar ist bzw. gedreht wird.

42. Messvorrichtung nach einem der Ansprüche 2 bis 41, **dadurch gekennzeichnet, dass** die Messsonde (25) relativ zu einem fest mit ihr verbundenen Messkopfteil (92) mittels eines Motors längs der Längsachse (119) der Bohrung (22) bewegbar ist bzw. bewegt wird.

43. Messvorrichtung nach Anspruch 42, **dadurch gekennzeichnet, dass** die taktilen Messtaster (26.1, 26.2, 26.3, 26.4) zum Zwecke der Erfassung der Mikrostruktur der Oberfläche (23) der Bohrung (22) ausschließlich mittels des Motors in Längsrichtung der Bohrung (22) bewegt werden.

44. Messvorrichtung nach einem der Ansprüche 2 bis 43, **dadurch gekennzeichnet, dass** ein bzw. der fest mit der Messsonde (25) verbundene/r Messkopfteil (92) fest mit einer Fixiereinrichtung (95) zur Fixierung des Messkopfes (21) an dem die Bohrung (22) aufweisenden Werkstück (24), vorzugsweise an dem Zylinderkopf eines Motors, verbunden ist.

45. Messvorrichtung nach einem der Ansprüche 2 bis 44, **dadurch gekennzeichnet, dass** die taktilen Messtaster (26.1, 26.2, 26.3, 26.4; 126.1, 126.2, 126.3) als Bezugsebenentaster und/oder als Kufentaster, vorzugsweise als Pendelkufentaster (32) gestaltet sind.

46. Messvorrichtung nach einem der Ansprüche 2 bis 45, **dadurch gekennzeichnet, dass** diese mit wenigstens einem Vibrationsmessfühler (33) zur Messung von Vibrationen der Messsonde (25) und/oder der Oberfläche (23) der Bohrung (22) ausgestattet ist.

47. Messvorrichtung nach Anspruch 46, **dadurch gekennzeichnet, dass** wenigstens einer der taktilen Messtaster (26.1) als Vibrationsmessfühler (33) zur Messung der Vibrationen der Messsonde (25) und/oder der Oberfläche (23) der Bohrung (22) gestaltet ist bzw. verwendet wird, so dass die Vibrationen mittels des wenigstens einen taktilen Messtasters (26.1) messbar sind bzw. gemessen werden.

48. Messvorrichtung nach Anspruch 46 oder 47, **dadurch gekennzeichnet, dass** die Tastspitze (27.1) des als taktiler Messtaster (26.1) ausgebildeten Vibrationsmessfühlers (33), während der Messung der Mikrostruktur der Oberfläche (23) der Bohrung (22) mithilfe des wenigstens einen weiteren taktilen Messtasters (26.2, 26.3, 26.4), relativ zu der Oberfläche (23) der Bohrung (22) zumindest in Längsrichtung der Bohrung (23) fixiert gehalten ist bzw. wird, während die Tastspitze (27.2, 27.3, 27.4) des wenigstens einen weiteren taktilen Messfühlers (26.2, 26.3, 26.4) zum Zwecke der Erfassung der Mikrostruktur der Oberfläche (23) der Bohrung (22) entlang derselben vorzugsweise in deren Längsrichtung bewegt ist bzw. wird.

49. Messvorrichtung nach einem der Ansprüche 2 bis 48, **dadurch gekennzeichnet, dass** an dem Einführende (38) der Messsonde (25) eine Reinigungsvorrichtung (97) zur Reinigung, insbesondere zum Abblasen und/oder Abstreifen der Oberfläche (23) der Bohrung (22) angeordnet ist.

50. Messvorrichtung nach Anspruch 49 **dadurch gekennzeichnet, dass** die Reinigungsvorrichtung (97) an dem Tragkörper (40) vorzugsweise lösbar befestigt ist.

51. Messvorrichtung nach einem der Ansprüche 49 oder 50, **dadurch gekennzeichnet, dass** die Reinigungsvorrichtung (97) mit einer Kreisscheibe (98) gestaltet ist, die einen Außendurchmesser (101) aufweist, der vorzugsweise geringfügig kleiner ist als der Innendurchmesser (39) der Bohrung (22) und die mit einem nach außen offenen Ringschlitz (99) gestaltet ist, durch den Luft und/oder Gas zum Zwecke eines Abblasens der Oberfläche (23) der Bohrung (22) hindurchführbar ist bzw. hindurchgeführt wird.

52. Messvorrichtung nach einem der Ansprüche 49 bis 51, **dadurch gekennzeichnet, dass** die Reinigungsvorrichtung (97) mit einer Kreisscheibe gestaltet ist, die im Bereich ihres Außenumfanges einen umlaufenden Abstreifer aufweist.

53. Messvorrichtung nach Anspruch 52, **dadurch gekennzeichnet, dass** der Abstreifer mit einem Abstreifergummi und/oder mit Abstreiferborsten gestaltet ist.

54. Messvorrichtung nach wenigstens einem der Ansprüche 2 bis 53, **dadurch gekennzeichnet, dass** die taktilen Messtaster (126.1, 126.2, 126.3) in Axial- bzw. Längsrichtung (36) der Messsonde (25) versetzt und/oder beabstandet zueinander angeordnet sind.

55. Messvorrichtung nach einem der Ansprüche 2 bis 54, **dadurch gekennzeichnet, dass** mehrere der taktilen Messtaster (126.1, 126.2, 126.3) mit einer gemeinsamen Vorschubeinrichtung (157) gekoppelt sind, mit deren Hilfe sie gemeinsam in Axial- bzw. Längsrichtung (36) der Messsonde (25) bzw. der Bohrung (22) bewegbar sind bzw. bewegt werden.

56. Messvorrichtung nach Anspruch 55, **dadurch gekennzeichnet, dass** es sich bei der Vorschubeinrichtung (157) um einen Motor (158) handelt.

57. Messvorrichtung nach einem der Ansprüche 2 bis 56, **dadurch gekennzeichnet, dass** die taktilen Messtaster (126.1, 126.2, 126.3) an einem gemeinsamen, sich in Längsrichtung bzw. Axialrichtung (36) der Messsonde (25) erstreckenden Tragkörper (129; 130; 41; 51; 132) befestigt und vorzugsweise von diesem getragen sind.

58. Messvorrichtung nach Anspruch 57, **dadurch gekennzeichnet, dass** der Tragkörper (129) mit Hilfe einer bzw. der gemeinsamen Vorschubeinrichtung (127) in Axial- bzw. Längsrichtung (36) der Messsonde (25) bewegbar ist bzw. bewegt wird.

59. Messvorrichtung nach wenigstens einem der Ansprüche 57 oder 58, **dadurch gekennzeichnet, dass** es sich bei dem Tragkörper (129) um eine Arbeitsspindel (130) mit einem Außengewinde (131) handelt, an der die taktilen Messtaster (126.1, 126.2, 126.3) jeweils über einen mit einem passenden Innengewinde (134) versehenen Körper (133), vorzugsweise einer Mutter (135), gelagert sind.

60. Messvorrichtung nach einem der Ansprüche 2 bis 59, **dadurch gekennzeichnet, dass** den taktilen Messtastern (126.1, 126.2, 126.3) ein gemeinsamer Referenzkörper (175) zugeordnet ist, der sich in Axial- bzw. Längsrichtung (36) der Messsonde (25) erstreckt und der eine oder mehrere Referenzebenen (174) für die diesem Referenzkörper (175) zugeordneten taktilen Messtaster (126.1, 126.2, 126.3) aufweist.

61. Messvorrichtung nach Anspruch 60, **dadurch gekennzeichnet, dass** der Referenzkörper (175) wenigstens eine gemeinsame Referenzebene (174) für mehrere der diesem Referenzkörper (175) zugeordneten taktilen Messtaster (126.1, 126.2, 126.3) aufweist.

62. Messvorrichtung nach Anspruch 60, **dadurch gekennzeichnet, dass** der Referenzkörper (175) eine gemeinsame Referenzebene (174) für alle der diesem Referenzkörper (175) zugeordneten taktilen Messtaster (126.1, 126.2, 126.3) aufweist.

63. Messvorrichtung nach einem der Ansprüche 60 bis 62, **dadurch gekennzeichnet, dass** die sich in Axial- bzw. Längsrichtung (36) der Messsonde (25) bzw. der Bohrung (22) erstreckende Referenzebene (174) eine Längskontur (176) aufweist, die der Längskontur (33) der Bohrung (22) entspricht.

64. Messvorrichtung nach einem der Ansprüche 2 bis 63, **dadurch gekennzeichnet, dass** die taktilen Messtaster (126.1, 126.2, 126.3) jeweils über ein Festkörpergelenk (180) mit einem sich in Axial- bzw. Längsrichtung (36) der Messsonde (25) erstreckenden Messtasterträger (132) fest verbunden sind, das eine ebene Bewegung der taktilen Messtaster (126.1 bis 126.3) ermöglicht bzw. verursacht.

65. Messvorrichtung nach einem der Ansprüche 2 bis 64, **dadurch gekennzeichnet, dass** die taktilen Messtaster (126.1, 126.2, 126.3) über wenigstens einen parallelkinematischen Auslenkungskörper, vorzugsweise über wenigstens zwei Blattfedern (184.1, 184.2) mit einem bzw. dem sich in Axial- bzw. Längsrichtung (36) der Messsonde (25) erstreckenden Messtasterträger (132) fest verbunden sind.

66. Messvorrichtung nach einem der Ansprüche 54 bis 65, **dadurch gekennzeichnet, dass** die in Axial- bzw. Längsrichtung (36) der Messsonde (25) versetzt und/oder beabstandet zueinander angeordneten taktilen Messtaster (126.1, 126.2, 126.3), gegebenenfalls die gemeinsame Vorschubeinrichtung (157) und/oder gegebenenfalls der gemeinsame Tragkörper (129) und/oder gegebenenfalls der gemeinsame Referenzkörper (175) und/oder gegebenenfalls die Festkörpergelenke (180) bzw. die Auslenkungskörper bzw. die Blattfedern (184.1, 184.2) und der Messtasterträger (132) an bzw. von einem der Messfühlerträger (41) und/oder einem der Fixierkörper (51) aufgenommen sind.

67. Messvorrichtung nach einem der Ansprüche 2 bis 66, **dadurch gekennzeichnet, dass** die in die Bohrung (52) einführbare Messsonde (25) über eine Kupplung (185) fest, jedoch lösbar mit einem Messkopfteil (192) verbindbar bzw. verbunden ist, der eine Einrichtung (138) zum Bewegen der Messsonde in Axial- bzw. Längsrichtung (36) der Bohrung (22) und/oder in Umfangsrichtung der Bohrung (22) und/oder zum Drehen der Messsonde (25) um ihre Längsachse (31) aufweist.

68. Messvorrichtung nach einem der Ansprüche 2 bis 67, **dadurch gekennzeichnet, dass** an dem Einführende (38) der Messsonde (25) ein vorzugsweise scheibenförmiger Absaughilfskörper (193) vorgesehen ist, dessen Außendurchmesser (194) geringfügig kleiner ist als der Innendurchmesser (39) der Bohrung (22), so dass die Messsonde (25) mit dem Absaughilfskörper (193) in die Bohrung (22) unter Ausbildung eines ringförmigen Spaltes (199) zwischen dem Absaughilfskörper (193) und der Bohrungswand (34) der Bohrung (22) einführbar ist.

69. Messvorrichtung nach Anspruch 68, **dadurch gekennzeichnet, dass** eine Absaugvorrichtung (194) vorgesehen ist, mit deren Hilfe Luft und/oder Gas durch den Spalt (199) zwischen dem Absaughilfskörper (193) und der Bohrungswand (34) der Bohrung (22) absaugbar ist, um eine Reinigung der Oberfläche (23) der Bohrung (22) bewirken zu können bzw. zu bewirken.

70. Messvorrichtung nach Anspruch 69, **dadurch gekennzeichnet, dass** die Absaugvorrichtung (195) derart relativ zu der Messsonde (25) angeordnet ist, dass mit deren Hilfe die Luft und/oder das Gas in Einführrichtung (177) der Messsonde (25) von dieser weg absaugbar ist bzw. abgesaugt wird.

71. Messvorrichtung nach einem der Ansprüche 2 bis 70, **dadurch gekennzeichnet, dass** die Messsonde (25) wenigstens einen ersten optischen Sensor (44) aufweist, mit dem die Oberfläche (23) der Bohrung (22) mit einer niedrigen Auflösung erfassbar ist bzw. erfasst wird und wenigstens einen zweiten optischen Sensor (144), vorzugsweise eine Kamera (104) aufweist, mit dem bzw. der die Oberfläche (23) der Bohrung (22) mit einer hohen bzw. höheren Auflösung erfassbar ist bzw. erfasst wird.

72. Messvorrichtung nach Anspruch 71, **dadurch gekennzeichnet, dass** in einem ersten Schritt mit Hilfe des ersten optischen Sensors (44) die Oberfläche (23) der Bohrung (22) über einen Großteil ihres Umfanges, vorzugsweise über ihren gesamten Umfang, in einer niedrigen Auflösung, beispielsweise von 300 dpi, erfasst wird und dass in einem zweiten Schritt mit Hilfe des zweiten optischen Sensors (144) an einer oder mehreren Stellen der Bohrung (22) deren lokale Oberfläche (23) in einer hohen bzw. höheren Auflösung, beispielsweise von 4.800 dpi, erfasst wird.

73. Messvorrichtung nach wenigstens einem der Ansprüche 2 bis 72, **dadurch gekennzeichnet, dass** die taktilen Messtaster in einer nicht in die Bohrung (22) eingeführten Stellung (207) mittels einer, vorzugsweise mit einer oder als eine Schutzhülle gestalteten, Schutzvorrichtung (200) gegen eine Kontamination mit Verunreinigungen, insbesondere Staub, geschützt sind.

74. Messvorrichtung nach Anspruch 73, **dadurch gekennzeichnet, dass** die Schutzvorrichtung (200) die Messsonde (25) zumindest im Bereich der taktilen Messtaster (26; 26.1, 26.2, 26.3, 26.4; 126.1, 126.2, 126.3) vollumfänglich umgreift.

75. Messvorrichtung nach wenigstens einem der Ansprüche 73 oder 74, **dadurch gekennzeichnet, dass** die Schutzvorrichtung (200) hauben- oder glockenförmig gestaltet ist.

76. Messvorrichtung nach wenigstens einem der Ansprüche 73 bis 75, **dadurch gekennzeichnet, dass** die Schutzvorrichtung (200) eine zum Einführende (38) der Messsonde (25) offene erste Öffnung (201) und eine zweite Öffnung (202) aufweist, durch die ein bzw. der Tragkörper (40) für die taktilen Messtaster (26; 26.1, 26.2, 26.3, 26.4; 126.1, 126.2, 126.3), vorzugsweise abgedichtet, hindurch tritt.

77. Messvorrichtung nach wenigstens einem der Ansprüche 73 bis 76, **dadurch gekennzeichnet, dass** die Messsonde (25) im Bereich ihres Einführendes (38) einen, vorzugsweise plattenförmigen, insbesondere als eine bzw. die Kreisscheibe (98, 198, 298) gestalteten, Abschlusskörper (203) aufweist, an dem, bei nicht in die Bohrung (22) eingeführten taktilen Messtastern (26; 26.1, 26.2, 26.3, 26.4; 126.1, 126.2, 126.3), eine Ringdichtung (204) abdichtend anliegt, die, vorzugsweise an der Schutzvorrichtung (200) befestigt, zu der Schutzvorrichtung (200) hin abgedichtet ist, so dass sich die taktilen Messtaster (26; 26.1, 26.2, 26.3, 26.4; 126.1, 126.2, 126.3) in einem von der Schutzvorrichtung (200), dem Abschlusskörper (203) und der Ringdichtung (204) begrenzten Schutzraum (212) befinden.

78. Messvorrichtung nach Anspruch 77, **dadurch gekennzeichnet, dass** die Ringdichtung (204) einen Außendurchmesser (205) aufweist, der größer ist als der Innendurchmesser (39) der Bohrung (22), so dass die Ringdichtung (204) auf einem Bohrungsrand (206) der Bohrung (22) abdichtend auflegbar ist.

79. Messvorrichtung nach wenigstens einem der Ansprüche 73 bis 78, **dadurch gekennzeichnet, dass** die Schutzvorrichtung (200) an einem bzw. an dem Messkopfteil (92, 192) des Messkopfes (20) befestigt ist.

80. Messvorrichtung nach wenigstens einem der Ansprüche 73 bis 79, **dadurch gekennzeichnet, dass** die Schutzvorrichtung (200) in Längsrichtung (31) der Messsonde (25) relativ zu dieser bewegbar ist.

81. Messvorrichtung nach wenigstens einem der Ansprüche 73 bis 80, **dadurch gekennzeichnet, dass** die Schutzvorrichtung (200) mit elastischen und/oder mit relativ zueinander bewegbaren Teilen ausgebildet ist, so dass die Schutzvorrichtung (200) in Längsrichtung (31) der Messsonde (25) bewegbar, insbesondere stauchbar und/oder zusammendrückbar und/oder zusammenschiebbar und wieder streckbar und/oder wieder auseinanderziehbar und/oder wieder auseinanderschiebbar ist.

82. Messvorrichtung nach wenigstens einem der Ansprüche 73 bis 81, **dadurch gekennzeichnet, dass** die Schutzvorrichtung (200) nach Art eines Faltenbalges gestaltet ist.

83. Messvorrichtung nach wenigstens einem der Ansprüche 73 bis 81, **dadurch gekennzeichnet, dass** die Schutzvorrichtung (200) mit oder aus relativ zueinander teleskopartig verschiebbaren, vorzugsweise mit Rohrsegmenten oder als Rohrsegmente ausgebildeten, Teilen gestaltet ist.

84. Messvorrichtung nach wenigstens einem der Ansprüche 73 bis 83, **dadurch gekennzeichnet, dass** beim Einführen der Messsonde (25) in die Bohrung (22), ausgehend von einer Stellung (207), in welcher sich die taktilen Messtaster (26; 26.1, 26.2, 26.3, 26.4; 126.1, 126.2, 126.3) nicht in der Bohrung (22) befinden, die Schutzvorrichtung (200) in eine Freigebestellung (209) überführbar ist bzw. überführt wird, in welcher mit Hilfe der taktilen Messtaster (26; 26.1, 26.2, 26.3, 26.4; 126.1, 126.2, 126.3) die Mikrostruktur der Oberfläche (23) der Bohrung (22) erfassbar ist bzw. erfasst wird.

85. Messvorrichtung nach wenigstens einem der Ansprüche 73 bis 84, **dadurch gekennzeichnet, dass** die Schutzvorrichtung (200) eine mit einem Luftfilter (210), insbesondere einem Staubfilter, versehene Durchgangsöffnung (211) aufweist.

86. Messstation mit mehreren Vorrichtungen (20) zum Messen der Mikrostruktur von Oberflächen (23) von Bohrungen (22) nach einem der Ansprüche 2 bis 85.

87. Messstation nach Anspruch 86, **dadurch gekennzeichnet, dass** die Mikrostruktur der Oberflächen(23) von mehreren Bohrungen (22) simultan mittels der Messvorrichtungen (20) gemessen wird.
